# EUROPEAN PATENT SPECIFICATION

(11) **EP 2 885 691 B1**
(45) Date of publication and mention of the grant of the patent: **03.10.2018**
(21) Application number: 13879639.6
(22) Date of filing: 08.08.2013
(51) Int. Cl.: G06F 3/01, G06F 1/16, G06F 3/03, G06F 3/0487

(54) **FLEXIBLE DISPLAY APPARATUS AND FEEDBACK PROVIDING METHOD THEREOF**
FLEXIBLE ANZEIGE VORRICHTUNG UND VERFAHREN ZUR BEREITSTELLUNG VON RÜCKKOPPLUNG
APPAREIL D'AFFICHAGE FLEXIBLE ET PROCÉDÉ DE RETOUR D'INFORMATIONS

(30) Priority: 16.08.2012 KR 20120089641
(43) Date of publication of application: 24.06.2015
(73) Proprietor: Samsung Electronics Co., Ltd., Suwon-si, Gyeonggi-do 443-742 (KR)
(72) Inventor: SEO, Joon-kyu, Suwon-si Gyeonggi-do 443-370 (KR); LEE, Chang-soo, Seosan-si Chungcheongnam-do 356-760 (KR); LEE, Geun-ho, Seongnam-si Gyeonggi-do 463-757 (KR)
(74) Representative: HGF Limited
(86) International application number: PCT/KR2013/007174
(87) International publication number: WO 2014/027796

(56) References cited:
- WO-A1-2007/000719
- US-A1- 2004 008 191
- US-A1- 2010 056 223
- US-A1- 2011 134 087
- US-A1- 2011 187 681
- US-A1- 2012 038 613
- US-A1- 2012 115 422

## Description

### Technical Field

The present disclosure relates to a flexible display apparatus and feedback providing method thereof. More particularly, the present disclosure relates to a flexible display apparatus capable of providing feedback according to shape transformation and feedback providing method thereof.

### Background Art

Due to the development of electronic technology, diverse types of display apparatuses have been developed. In particular, display apparatuses such as Televisions (TVs), Personal Computers (PCs), laptop computers, tablet PCs, mobile phones, smart phones, and Motion Picture Experts Group (MPEG)-2 Audio Layer III (MP3) players have been widely used in most homes so that the market penetration rate of such display apparatuses has become high.

In order to satisfy users' needs for newer and more diverse functions, the effort to develop new types of display apparatuses, so-called next generation displays, have been made recently.

As an example of a next generation display, there is a flexible display apparatus. The flexible display apparatus is a display apparatus which has a feature of being flexible like paper.

The flexible display apparatus can be bent and shaped by the user's manipulation and thus can be used for various purposes. For example, the flexible display apparatus may embody a portable device such as mobile phones, tablet PCs, electronic picture frames, Personal Digital Assistants (PDAs), and MP3 players. However, the flexible display can be damaged by excessive bending, and there has been no way for a user to know whether bending of the flexible display is likely to damage the flexible display.

US 2004/0008191 discloses a user interface apparatus having a flexible part including a one-dimensional analog sensor for sensing distortion of the flexible part, and a processor unit for detecting one of input states based on a value of the detected distortion and having a task run. The task relates to a selected input state. The input states are related to dynamic or static positive/negative distortion of the flexible part. The user interacts with the apparatus by physically manipulating a body of the apparatus.

Accordingly, there is a need for a way of enhancing user convenience by providing various feedbacks according to a transformation of a shape of the flexible display apparatus.

The above information is presented as background information only to assist with an understanding of the present disclosure. No determination has been made, and no assertion is made, as to whether any of the above might be applicable as prior art with regard to the present disclosure.

### Disclosure of Invention

### Technical Problem

Aspects of the present disclosure are to address at least the above-mentioned problems and/or disadvantages and to provide at least the advantages described below. Accordingly, an aspect of the present disclosure is to provide a flexible display apparatus which provides users with a warning feedback according to a degree of bending, and a feedback providing method thereof.

### Solution to Problem

In accordance with an aspect of the present invention, there is provided a flexible display apparatus according to claim 1 and a method of providing feedback in a flexible display apparatus according to claim 11. Further aspects of the invention are outlined in the dependent claims. Embodiments which do not fall within the scope of the claims do not describe part of the present invention.

According to an aspect of the present disclosure, a flexible display apparatus is provided. The flexible display apparatus includes a sensor configured to sense a degree of bending of the apparatus, a feedback provider configured to provide feedback according to the sensed bending, and a controller configured to control the feedback provider to provide the feedback when the degree of the sensed bending exceeds a threshold value.

The flexible display apparatus may further include a storage configured to store a feedback providing form set according to the degree of bending, wherein the controller may control the feedback provider to provide varied feedback according to the sensed degree of bending according to the feedback providing form stored in the storage.

The flexible display apparatus may further include a storage configured to store a threshold value which is set according to a bending area, wherein the controller controls the feedback provider to provide feedback on a bending area where bending exceeding the threshold value occurs, using the threshold value which is set variously according to the bending area and is stored in the storage.

The controller may control the feedback provider to provide the feedback to a location corresponding to a bending area according to a location of the bending area where bending exceeding the threshold value occurs.

When bending exceeding the threshold value occurs repeatedly, the controller may count repetitions of the bending and control the feedback provider to provide varied feedback according to a number of the repetitions.

The flexible display apparatus may further include a display configured to display a screen, wherein the controller may control the feedback provider to provide at least one of screen feedback to change a display state of the screen or to output a graphical message, a sound feedback to output a warning sound or a voice message, and a haptic feedback to generate a vibration.

The screen feedback may change the display state by changing at least one of a color and a brightness of the screen or by flickering the screen.

The flexible display apparatus may further include a storage, wherein when the sensed degree of bending exceeds the threshold value, the controller may store information regarding the bending in the storage.

The flexible display apparatus may further include a communicator configured to communicate with a server, wherein the controller may transmit the information regarding the bending to the server, and receive a service regarding the bending from the server.

The information regarding the bending may include information regarding at least one of a bending location, a degree of bending, and a number of bending manipulations.

When the bending exceeding the threshold value is sensed more than a threshold number, the controller may change the threshold value.

The threshold value may include a radius of curvature.

According to another aspect of the present disclosure, a flexible display apparatus includes a display, and an element configured to be mounted in a part of the display and including a stress limit factor, wherein, when bending manipulation exceeding the stress limit factor occurs on the part of the display in which the element is mounted, the element breaks.

According to yet another aspect of the present disclosure, a feedback providing method of a flexible display apparatus includes sensing a bending of the flexible display apparatus, and providing the feedback on the bending when a degree of the sensed bending exceeds a threshold value.

In the operation of providing the feedback, varied feedback may be provided according to the sensed degree of bending according to a pre-stored feedback providing form which is set according to the degree of bending.

In the operation of providing the feedback, the feedback on a bending area where bending exceeding the threshold value occurs may be provided using the pre-stored threshold value which is set according to the bending area.

In the operation of providing the feedback, the feedback may be provided to a location corresponding to a bending area according to a location of the bending area where bending exceeding the threshold value occurs.

In the operation of providing the feedback, when bending exceeding the threshold value occurs repeatedly, varied feedback may be provided according to a number of repetitions of the bending.

In the operation of providing the feedback, at least one of a screen feedback to change a display state of the screen or to output a graphical message, a sound feedback to output a warning sound or a voice message, and a haptic feedback to generate a vibration, may be provided.

The method may further include storing information regarding the bending when the sensed degree of bending exceeds the threshold value.

Additional and/or other aspects and advantages of the disclosure will be set forth in part in the description which follows and, in part, will be obvious from the description, or may be learned by practice of the disclosure.

Other aspects, advantages, and salient features of the disclosure will become apparent to those skilled in the art from the following detailed description, which, taken in conjunction with the annexed drawings, discloses various embodiments of the present disclosure.

### Advantageous Effects of Invention

In view of the above, a flexible display apparatus that increases user convenience is provided.

### Brief Description of Drawings

The above and other aspects, features, and advantages of certain embodiments of the present disclosure will be more apparent from the following description taken in conjunction with the accompanying drawings, in which:
FIG. 1 is a block diagram of a configuration of a flexible display apparatus consistent with an embodiment of the present disclosure;
FIG. 2 shows a basic configuration of a display of a flexible display apparatus consistent with an embodiment of the present disclosure;
FIGS. 3A, 3B, 3C, 4A, 4B, 5A, 5B, 5C, 6A, 6B, 7A, 7B, 7C, 8A, 8B, 8C, 8D, 9A, 9B, 10A, and 10B show methods for sensing bending according to various embodiments of the present disclosure;
FIG. 11 is a block diagram of a detailed configuration of a flexible display apparatus to describe operations consistent with various embodiments of the present disclosure;
FIG. 12 shows a detailed configuration of the controller of FIG. 11;
FIG. 13 shows a configuration of software in the storage to support the operations of the controller consistent with various embodiments of the present disclosure;
FIGS. 14, 15, 16, 17, 18, 19, 20, 21, 22, and 23 show feedback providing methods consistent with various embodiments of the present disclosure;
FIG. 24 shows an example of a form of a flexible display apparatus built in a main body according to an embodiment of the present disclosure;
FIG. 25 shows a flexible display apparatus including an detachable power supplier; and
FIG. 26 is a flowchart of a feedback providing method consistent with an embodiment of the present disclosure.
Throughout the drawings, it should be noted that like reference numbers are used to depict the same or similar elements, features, and structures.

### Best Mode for Carrying out the Invention

-

### Mode for the Invention

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

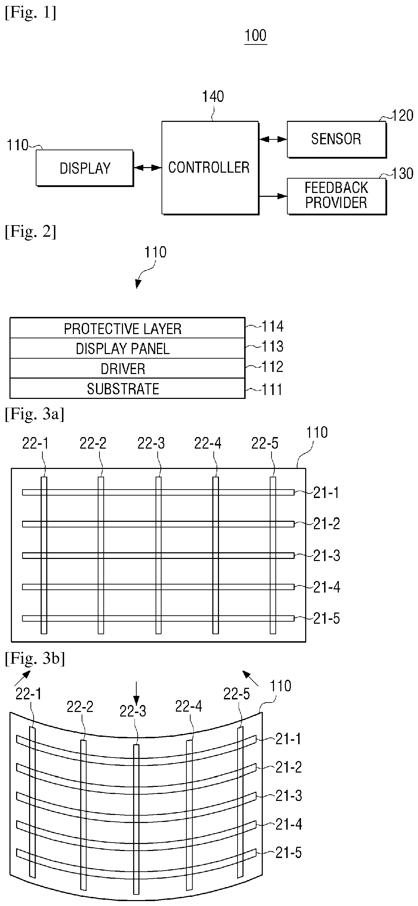

FIG. 1 is a block diagram of a configuration of a flexible display apparatus according to an embodiment of the present disclosure.

Referring to FIG. 1, the flexible display apparatus 100 may include a display 110, a sensor 120, feedback provider 130, and a controller 140.

The display 110 includes a screen. The flexible display apparatus 100 including the display 110 may be bent to a threshold degree in normal use without breaking. Accordingly, the display 110 may be formed in a flexible structure and be made of flexible materials. Detailed structure of the display 110 will be described later.

The sensor 120 senses bending of the flexible display apparatus 100 (or the display 110). A bend sensor to sense the bending may be arranged to sense bending of the flexible display apparatus 100 in some or all directions, and may recognize a location of a bending area, a bending radius, a bending angle, etc., and transmit the information to the controller 140.

The feedback provider 130 provides feedback on bending.

In particular, the feedback provider 130 provides feedback such as a sound, a screen change, or haptics. The feedback may be a warning feedback to inform the user that the flexible display apparatus 100 is mechanically stressed due to bending.

More specifically, suppose that when a degree of bending sensed by the sensor 120 according to control of the controller 140 exceeds a predetermined threshold value, a feedback sound is provided. Further, a corresponding feedback sound may be provided according to the degree of bending. For example, the feedback sound may be provided as a beep sound, or as a guide or warning message such as "Do not bend" and "When bent more, the flexible display apparatus 100 may be damaged." Characteristics of the feedback sound, such as a tone, volume, or different spoken warning message, may be determined according to the degree of bending.

In addition, suppose that when the degree of bending exceeds a threshold value, a screen feedback is provided. Further, a display form of the screen may vary according to the bending degree. For example, a screen feedback may be provided by switching on or off the screen, changing a color of part or all of the screen, fading out the screen, or changing the screen into black. Alternatively, visual feedback may be provided in a graphic message form such as "Do not bend" and "When bent more, the flexible display apparatus 100 may be damaged." Characteristics of the screen visual feedback may be determined according to the degree of bending.

In addition, suppose that when the degree of bending exceeds a threshold value, a haptic feedback is provided. Further, vibration may be generated according to the degree of bending. For example, the haptic feedback may be provided by changing a vibration intensity according to the bending degree or changing a vibration generating area. Characteristics of the haptic feedback may be determined according to the degree of bending.

In addition, it is also possible to provide two or more of the sound feedback, screen feedback, and haptic feedback at the same time.

In addition, the threshold value which is a standard to provide the feedback may be set as default when the flexible display apparatus 100 is manufactured, or may be set by the user. In addition, the type of the feedback may be set as default when the flexible display apparatus 100 is manufactured, or may be changeable by the user.

The controller 140 controls the feedback provider 120 to provide a type of feedback according to the degree of bending sensed by the sensor 120. For example, according to the degree of bending, the warning sound may be louder, an interval of the warning sound may be narrower, or a color of the screen may be darker. In this case, the feedback may be provided from a point of time when the bending starts or from a point of time when the bending degree exceeds the threshold value.

In addition, the controller 140 controls the feedback provider 120 to provide corresponding feedback when the degree of bending sensed by the sensor 120 exceeds a threshold value. For example, according to the degree of bending, the interval of the warning sound may be narrower, and when the degree of bending exceeds the threshold value, a continuous warning sound may be provided. That is, the interval of the warning sound can become narrower in an order of "beep∼∼∼beep∼∼∼beep∼∼∼beep" ? "beep∼∼beep∼∼beep∼∼" ? "beep∼beep∼beep∼" ? "beep beep beep beep...", and then when the degree of bending exceeds the threshold value, the warning sound "beeeeeep......" is output. That is, a speed of the audio warning sound may increase until it is emitted constantly. The feedback may be adjusted in other ways as well; for example, a tone (frequency) and/or volume (loudness) of the warning sound may increase according to the degree of bending, up to a maximum.

More specifically, the controller 140 may provide corresponding feedback when a bending state sensed by the sensor 120, for example, a bending angle or a bending radius, exceeds a bending angle threshold or a bending radius threshold. The bending radius may be defined as a radius of curvature "R" by bending. The bending angle may be defined as an angle between a predetermined reference plane and a particular area of the flexible display apparatus 100 according to a bending state.

In addition, the controller 140 may provide different feedback according to the number of bending manipulations having a bending degree which exceeds a threshold value. It is not required that the threshold value be a value at which the flexible display will be damaged. For example, when the number of bending manipulations on a same area of the flexible display exceeds a threshold number, corresponding feedback may be provided. In this case, when bending directions of bending manipulations occurring on the same area are different, the controller 140 may differentiate counts of the bending manipulations according to the bending directions. Further, the threshold number of bending manipulations may be determined according to the direction of bending. That is, the flexible display may be more likely to be damaged after a number of bends in one direction than in another direction.

In addition, the controller 140 may provide feedback to a location corresponding to a bending area according to the bending area where bending which exceeds a threshold value occurs. For example, when an upper left edge area of the flexible display apparatus 100 is bent more than a threshold value, feedback may be provided to a location corresponding to the upper left edge area. The location corresponding to the upper left edge area may be diverse locations within a range that the user can recognize the upper left edge area, for example, at least one of the front and rear surfaces of the upper left edge area, within a predetermined distance of the upper left edge area, and within a predetermined distance of a bending line of the upper left edge area. The feedback may thus indicate not only whether the bending exceeds the threshold, but may also indicate where the bending exceeds the threshold.

In addition, the controller 140 may provide different feedback according to the number of repeated bending manipulations when bending more than a threshold value repeatedly occurs at a particular area.

More specifically, the controller 140 may provide stronger feedback as the number of bending manipulations which exceed a threshold value increases. For example, when a first bending occurs more than a threshold value, the controller 140 may provide a weak haptic feedback; when a second bending occurs more than the threshold value, the controller 140 may provide an intermediate haptic feedback; and when a third bending occurs more than the threshold value, the controller 140 may provide a strong haptic feedback.

Alternatively, the controller 140 may provide more types of feedback as the number of bending manipulations which exceed a threshold value increases. For example, when a first bending occurs more than a threshold value, the controller 140 may provide visual screen feedback; when a second bending occurs more than the threshold value, the controller 140 may provide the screen feedback and a sound feedback; and when a third bending occurs more than the threshold value, the controller 140 may provide the screen feedback, the sound feedback, and a haptic feedback together.

In addition, the controller 140 may provide feedback according to a bending manipulation time for maintaining bending exceeding a threshold value. For example, the controller 140 may provide feedback when the bending manipulation time is lower than a threshold time and another feedback when the bending manipulation time is equal to or higher than the threshold time.

In addition, the controller 140 may divide a degree of bending which exceeds a threshold value into a plurality of levels and provide feedback according to each level. The degree of bending may be a degree within a threshold range from a bending line, and may be determined by a bending radius or a bending angle. The bending line is defined as a line which connects points having a highest bending degree on a bent area. For example, a line which connects bending points (or bending coordinates) having the maximum resistance value output by the bend sensor may become a bending line. For another example, a degree of bending more than a threshold value may be divided into a first level which corresponds to a burden on the flexible display apparatus 100, a second level which corresponds to a risk of damage, and a third level where the flexible display is on the verge of damage. According to the levels, a different sound or a different voice message may be provided, haptic feedback having a different vibration interval or different vibration intensity may be provided, or different screen warning indication may be provided.

In addition, the controller 140 may provide feedback according to a time for maintaining bending which exceeds a threshold value. For example, corresponding feedback may be provided only when bending which exceeds a threshold value is performed more than a time threshold. In addition, even when bending which exceeds the threshold value is performed more than the time threshold, feedback may be provided according to the elapsed time.

In addition, the controller 140 may provide feedback according to a function activated by the flexible display apparatus 100 when bending occurs more than the threshold value. For example, when the flexible display apparatus 100 is displaying video and is outputting corresponding sound, haptic feedback or screen feedback may be provided so that the user may easily recognize the feedback. The feedback may thus be dynamically determined according to circumstances when the feedback is provided.

In addition, the controller 140 may store information related to bending in a storage (not shown) when a degree of bending sensed by the sensor 120 exceeds a threshold value. More specifically, the controller 140 may store information regarding a bending area, a bending time, a degree of bending, and a number of bending manipulations in the storage.

In addition, the controller 140 may control a communicator (not shown) to transmit information related to bending to an external server (not shown). Accordingly, the server may store and manage information related to the bending of the flexible display apparatus 100, and provide diverse services according to circumstances. For example, a customer service manager may provide the flexible display apparatus 100 with information regarding replacement of components and information which allows the user to repair a malfunction of the flexible display apparatus 100 in person based on the stored information. Accordingly, the user may not be required to go to a customer service center for the repair. In addition, the server may be used to update the flexible display apparatus 100 based on the corresponding information. Furthermore, the server may provide diverse services based on the corresponding information.

The threshold value may be set according to an area of the flexible display apparatus 100. For example, if the flexible display apparatus 100 may be folded in half and kept in a folded state, a threshold value of a foldable center area may be set high and a threshold value of the remaining area may be set lower than the threshold value for the center area.

In addition, if there is a rigid area on the flexible display apparatus 100, a threshold value of the rigid area may be set lower than other areas.

In addition, a threshold value of an area including a battery or a chip may be set lower than other areas.

In addition, different threshold values may be set for horizontal lines and vertical lines of the flexible display apparatus 100.

In addition, if the same threshold value is set for the entire area of the flexible display apparatus 100, the threshold value may be set based on a threshold value of an area having the least flexibility.

In addition, the threshold value of the flexible display apparatus 100 may be variable. For example, when the number of bending manipulations obtained by logging the number of bending manipulations for a particular area of the flexible display apparatus 100 exceeds a threshold number, the threshold value of the particular area may become increased. In this case, the flexible display apparatus 100 may inform the user of the change in the threshold value through a Graphical User Interface (GUI) or a voice message.

In addition, the controller 140 may provide feedback to a plurality of areas at the same time when the different areas are bent more than threshold values at the same time. For example, when a first area is bent more than the threshold value, feedback of warning sound may be provided to the first area, and at the same time, when a second area is bent more than the threshold value, haptic feedback may be provided to the second area. It is also possible to output feedback of different types of warning sounds to multiple areas at the same time. Accordingly, due to the multiple types of warning sounds, the user may recognize that a plurality of areas is bent more than the threshold values.

In addition, if a particular area is excessively bent and thus a function module mounted in the particular area or in an adjacent area cannot operate normally, the controller 140 may provide a warning message when the user tries to use the function module. For example, if the flexible display apparatus 100 is bent and thereby a camera module is hidden and thus cannot operate normally, the controller 140 may provide a warning message when the user tries to use the camera module.

In this case, information informing that it is impossible to normally operate the particular module according to a degree of bending of the particular area may be pre-stored. However, it is also possible to sense a corresponding situation by providing the particular module with a sensor.

In addition, if a particular area is excessively bent more than a threshold value and thus an adjacent area cannot operate normally, the controller 140 may allow a corresponding module to be disabled when the user tries to use the corresponding module.

For example, when a proximity sensor can recognize contact of the user's face or ear, touch may be deactivated by turning off a screen Liquid Crystal Display (LCD) or a touch sensor. However, when the flexible display apparatus 100 is excessively bent, the proximity sensor may erroneously recognize a portion of the excessively bent flexible display apparatus 100 as the face or ear and thereby may malfunction, although no actual face or ear is in contact. Accordingly, when the flexible display apparatus 100 is excessively bent while talking on the phone and covers the proximity sensor, the controller 140 may recognize the excessively bent state, allow the proximity sensor to be disabled, and ignore input to the proximity sensor.

In addition, in a normal state, when an illumination sensor senses the brightness of a room, the brightness of the screen is adjusted according to the brightness of the room. However, when the illumination sensor is covered, the controller 140 may ignore input to the proximity sensor.

In addition, when a particular area is excessively bent and thus secondary damage as well as damage by bending is predicted, the controller 140 may allow the corresponding part to be disabled. For example, when the flexible display apparatus 100 is bent and there is a risk that a positive (+) electrode and a negative (-) electrode may come in contact with each other, the controller 140 may allow electrical current not to flow through a corresponding area.

In addition, when the flexible display apparatus includes a plurality of display surfaces, the controller 140 may provide feedback to a corresponding surface. For example, if a plurality of physical displays 110 constitutes a display screen, the controller 140 may provide corresponding feedback only to a particular display 110 when determining that the particular display 110 is excessively bent.

In the aforementioned embodiments, general bending is described as an example, but it shall be obvious to those skilled in the art that warning feedback may be provided in the same manner even in the case of rolling or folding of the flexible display apparatus 100. For example, in the case of rolling, a rolling threshold value may be set within the limits of stress to the flexible display apparatus 100, and when the flexible display apparatus 100 is rolled more than the rolling threshold value, warning feedback may be provided.

In another embodiment of the present disclosure, the flexible display apparatus 100 may include a display and an element.

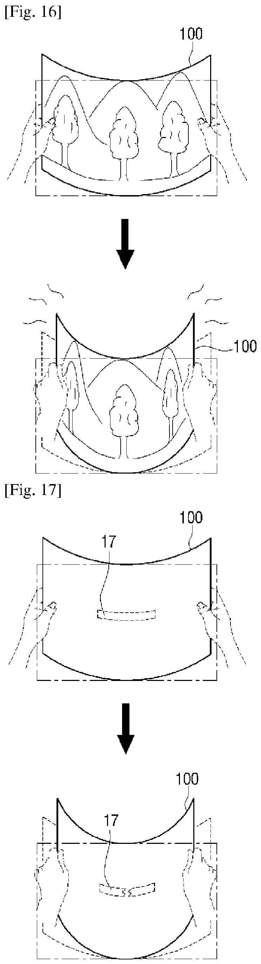

As shown in FIG. 17, the element 17 is located on an area of the display where a set internal element 17 is located, and may have a threshold stress limit factor. The stress indicates power of an object which keeps original shape against external pressure.

In this case, when the area where the element 17 is located is bent more than the stress limit factor, the element 17 will break.

More specifically, the element 17 is located in a bendable area of the flexible display apparatus 100 and is bent in proportion to a bending degree. The element 17 may be mounted so as to break when the flexible display apparatus 100 is bent more than a threshold curvature.

The element 17 may be implemented, for example, in a bar shape. When the flexible display apparatus 100 is bent more than the threshold curvature as described above, the element 17 will break. Accordingly, when the flexible display apparatus 100 fails to function properly in the future, the element 17 may provide information to help determine whether the problem may be due to excessive bending.

FIG. 2 shows a basic configuration of a display of a flexible display apparatus according to an embodiment of the present disclosure.

Referring to FIG. 2, the display 110 may include a substrate 111, a driver 112, a display panel 113, and a protective layer 114.

The substrate 111 may be implemented with a plastic substrate (for example, a polymer film).

The plastic substrate has a structure including a processing barrier coating on both sides of a base film. The base film may be implemented with a resin such as Polyimide (PI), Polycarbonate (PC), Polyethyleneterephthalate (PET), Polyethersulfone (PES), Polythylenenaphthalate (PEN), Fiber Reinforced Plastic (FRP), or the like. The barrier coating is performed on opposed sides of the base film, and may use an organic film or an inorganic film to sustain flexibility.

The substrate 111 may include a material having flexibility such as thin glass and metal foil as well as the plastic substrate.

The driver 112 drives the display panel 113. More specifically, the driver 112 applies driving voltage to a plurality of pixels which constitute the display panel 113, and may be implemented with a Thin Film Transistor (TFT), a low temperature polysilicon TFT, an organic TFT, or the like. The driver 112 may be implemented in diverse forms according to an implementation form of the display panel 113. For example, the display panel 113 may include an organic luminous body which includes a plurality of pixel cells, and an electrode layer which covers both sides of the organic luminous body. In this case, the driver 112 may include a plurality of transistors corresponding to the pixel cells of the display panel 113. The controller 140 applies an electrical signal to a gate of each transistor so that the pixel cell which is connected to the transistor can emit light. Consequently, an image can be displayed.

Alternatively, the display panel 113 may be implemented with an Electroluminescence (EL), an Electrophoretic Display (EPD), an Electrochromic Display (ECD), a Liquid Crystal Display, an Active Matrix Liquid Crystal Display (AMLCD), a Plasma Display Panel (PDP), or the like instead of the Organic Light Emitting Diode (OLED). However, since the LCD cannot emit light autonomously, a backlight is required with the LCD. In the case of an LCD which does not need a backlight, ambient light is used. Accordingly, in order to use an LCD display panel 113 without a backlight, a condition such as outdoor environment having a large amount of light must be satisfied.

The protective layer 114 protects the display panel 113. For example, the protective layer 114 may include a substance such as ZrO, CeO2, ThO2, or the like. The protective layer 114 may be formed in a transparent film to cover the entire surface of the display panel 113.

As shown in FIG. 2, the display 110 may be implemented with electronic paper (e-paper). The electronic paper is a display to apply the features of ordinary ink on paper. Unlike related-art flat panel displays, the electronic paper reflects light. In addition, the electronic paper may change an image or a letter using electrophoresis using a twist ball or a capsule.

If the display 110 consists of transparent components, a flexible and transparent display apparatus may be realized. For example, if the substrate 111 is made of a polymer substance such as a transparent plastic, if the driver 112 is implemented with a transparent transistor, and if the display panel 113 is implemented with a transparent organic light emitting layer and a transparent electrode, the flexible display apparatus 100 may become transparent.

The transparent transistor is a transistor which is manufactured by replacing an opaque silicon of a related-art TFT with a transparent substance such as zinc oxide or titanium oxide. In addition, the transparent electrode may be made of a material such as Indium Tin Oxide (ITO) or graphene. Graphene has a honeycomb lattice plane structure made of carbon atoms, and has transparency. In addition, the transparent organic light emitting OLED layer may be implemented with diverse substances.

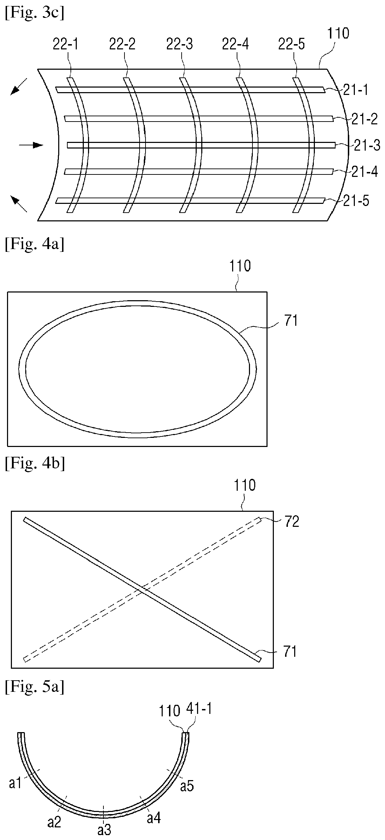

FIGS. 3A, 3B, and 3C show an arrangement of bend sensors according to an embodiment of the present disclosure.

In FIG. 3A, the bend sensors are mounted in a front side of the display 110, but this is merely an example. The bend sensors may be mounted in a rear side of the display 110 or in both sides of the display 110. In addition, the shape, number, and location of the bend sensors may vary. For example, in the display 110, there may be a single bend sensor, or a plurality of bend sensors may be connected to one another. Herein, the single bend sensor may sense a single bending data, or may have a plurality of sensing channels to sense a plurality of bending data.

In FIG. 3A, a plurality of bar-shaped bend sensors are arranged vertically and horizontally, thereby having a lattice structure.

With reference to FIG. 3A, bend sensors 21-1 to 21-5 are arranged in first direction, and bend sensors 22-1 to 22-5 are arranged in second direction. The bend sensors may be spaced apart from each other at regular intervals.

In FIG. 3A, the five bend sensors 21-1 to 21-5 and the five bend sensors 22-1 to 22-5 are arranged vertically and horizontally, respectively, but this is merely an example. It is possible to change the number of bend sensors according to the size of the flexible display apparatus 100 or the like. In order to sense bending which may occur on the entire area of the flexible display apparatus 100, the bend sensors in FIG. 3A are arranged vertically and horizontally. Accordingly, if only a portion of the flexible display 110 is flexible or if only a portion of the flexible display apparatus 100 needs to sense bending, bend sensors may be arranged only in the corresponding portions.

Each bend sensor may be implemented with an electric resistance sensor which uses electric resistance, or a micro optical fiber sensor which uses strain of optical fiber. For convenience of description, the bend sensors are electric resistance sensors in this embodiment.

More specifically, when a center area which is located on a center on the basis of right and left edges of the flexible display apparatus 100 is bent downwards as shown in FIG. 3B, tension is applied to the horizontally arranged bend sensors 21-1 to 21-5 by the bending. Accordingly, a resistance value of each of the horizontally arranged bend sensors 21-1 to 21-5 changes. The sensor 120 may sense the change of output values output from the bend sensors 21-1 to 21-5 and sense that the flexible display apparatus 100 is horizontally bent on the basis of the center of the surface of the display 110. In FIG. 3B, the center area is bent downwards (referred to herein below as Z- direction) with respect to the surface of the display 110. However, even when the center area is bent upwards (referred to herein below as Z+ direction) with respect to the surface of the display 110, the sensor 120 may sense bending based on change of output values of the horizontal bend sensors 21-1 to 21-5.

In addition, when a center area which is located on a center on the basis of upper and lower edges of the flexible display apparatus 100 is bent upwards as shown in FIG. 3C, tension is applied to the vertically arranged bend sensors 22-1 to 22-5. The sensor 120 may sense that the flexible display apparatus 100 is vertically bent, based on the change of output values output from the vertically arranged bend sensors 22-1 to 22-5. In FIG. 3C, bending is shown in the Z+ direction. In addition, it is also possible to sense bending in Z- direction using the vertically arranged bend sensors 22-1 to 22-5.

When the flexible display 110 is diagonally bent, tension is applied to all of the horizontal and vertical bend sensors. Accordingly, diagonal bending may be sensed based on output values of the horizontal and vertical bend sensors.

FIGS. 4A and 4B show an arrangement of bend sensors according to another embodiment of the present disclosure.

FIG. 4A shows an example of a structure of sensing bending using a single bend sensor 71 which is arranged on one side of the display 110. As shown in FIG. 4A, the bend sensor 71 may be formed in a closed curve such as circle, quadrangle, or other polygon, and may be arranged along the edges of the display 110. The flexible display apparatus 100 may determine that a portion having change in an output value on the closed curve is a bending area.

FIG. 4B shows an embodiment in which two bend sensors 71 and 72 are arranged to cross each other. As shown in FIG. 4B, a first bend sensor 71 may be provided on a first side of the display 110, and a second bend sensor 72 may be provided on a second side of the display 110. The first bend sensor 71 may be arranged on the first side in a first diagonal direction, and the second bend sensor 72 may be arranged on the second side in a second diagonal direction. Accordingly, since output values and output portions of the first and second bend sensors 71 and 72 vary according to diverse bending conditions such as when each corner is bent, when each edge is bent, when the center is bent, and when folding or rolling occurs, the flexible display apparatus 100 may determine what type of bending occurs based on the features of the output values.

A method for sensing change forms of ordinary bending, folding, and rolling using bend sensors is described here in detail.

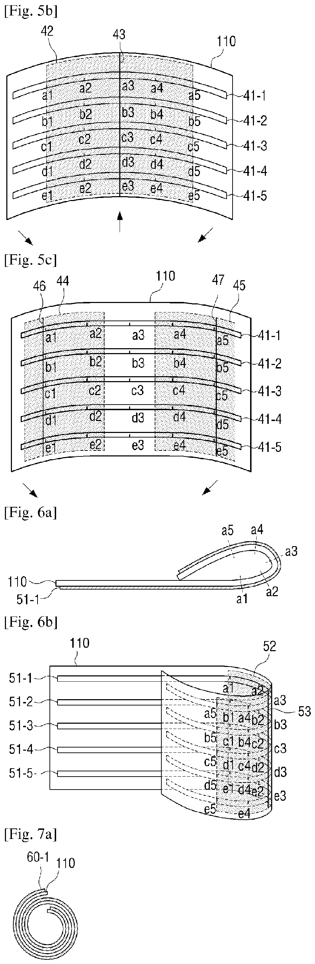

FIGS. 5A, 5B, and 5C show a method for sensing bending of the flexible display apparatus 100 using bend sensors according to an embodiment of the present disclosure.

Firstly, FIG. 5A is a cross-sectional view of a bent flexible display apparatus 100.

When the flexible display 110 is bent, bend sensors which are provided on one side or both sides of the flexible display 110 are bent accordingly, and will have resistance values corresponding to the intensity of applied tension, and thus output corresponding output values.

For example, when the flexible display 110 is bent as shown in FIG. 5A, bend sensor 41-1 provided on a rear side of the flexible display 110 is bent and outputs a resistance value corresponding to the intensity of applied tension.

In this case, the intensity of tension increases in proportion to the degree of bending. For example, when the flexible display 110 is bent as shown in FIG. 5A, the degree of bending of the center area is the highest. Accordingly, the highest tension is applied to the bend sensor 41-1 at the center point a3, and thus the bend sensor 41-1 has the highest resistance value. On the contrary, as distance gets farther from the center point a3, the degree of bending degree. A degree of bending will be lower at points a2 and a4 than at point a3, and will be lower at points a1 and a5 than at points a2 and a4. Accordingly, as distance from the center point a3 gets closer to points a2 and a1 in sequence or gets closer to points a4 and a5 in sequence, the resistance value decreases.

If the resistance value output from the bend sensor is the highest at a particular point and gradually decreases in opposite directions, the sensor 120 may determine that an area having the highest resistance value is the most bent area. In addition, the sensor 120 may determine that an area having an unchanged resistance value is an area which is not bent and that an area having a resistance value which has changed more than a predetermined degree is a bending area.

FIGS. 5B and 5C show a method for defining a bending area according to an embodiment of the present disclosure. Since FIGS. 5B and 5C are provided to show that the flexible display apparatus 100 is horizontally bent with regard to the front side, vertically arranged bend sensors are not shown for convenience of description. Vertically arranged bend sensors, if present, would not be bent in the depicted example. In addition, for convenience of description, reference numbers of bend sensors are given differently according to drawings. In practice, bend sensors having a structure as shown in FIG. 3A may be used the way they are.

The bending area is an area which is bent by the flexible display 110. When the flexible display 110 is bent, bend sensors 41-1 to 41-5 are also bent. Accordingly, the bending area may be defined as all the points where bend sensors 41-1 to 41-5, which output resistance values different from an original state, are located.

The sensor 120 may sense the size of a bending line, the direction of the bending line, the location of the bending line, the number of bending lines, the number of bending manipulations, the speed of changing bending, the size of a bending area, the location of the bending area, the number of bending areas, and the like based on the relationships between points having change in their resistance values.

More specifically, when the distance between the points having changes in their resistance values is within a threshold distance, the points are sensed as a single bending area. However, among the points having changes in their resistance values, if there are points having a distance more than the threshold distance, the points may be divided into different bending areas on the basis of the points having distance more than the threshold distance. More detailed description is provided with reference to FIGS. 5B and 5C.

FIG. 5B shows a method for sensing a single bending area. When the flexible display 110 is bent as shown in FIG. 5B, points a1 to a5 of bend sensor 41-1, points b1 to b5 of bend sensor 41-2, points c1 to c5 of bend sensor 41-3, points d1 to d5 of bend sensor 41-4, and points e1 to e5 of bend sensor 41-5 have different resistance values from an original state.

In this case, the points which sense change in the resistance value on the bend sensors 41-1 to 41-5 are continuously arranged within the threshold distance from each other.

Accordingly, the sensor 120 senses an area 42 including the points a1 to a5 of the bend sensor 41-1, the points b1 to b5 of the bend sensor 41-2, the points c1 to c5 of the bend sensor 41-3, the points d1 to d5 of the bend sensor 41-4, and the points e1 to e5 of the bend sensor 41-5, as a single bending area. A center line 43 is sensed as having a greatest change in resistance, and the bending is determined to be greatest at center line 43.

FIG. 5C shows a method for sensing a plurality of bending areas. When the flexible display 110 is bent as shown in FIG. 5C, the points a1 to a2 and a4 to a5 of the bend sensor 41-1, the points b1 to b2 and b4 to b5 of the bend sensor 41-2, the points c1 to c2 and c4 to c5 of the bend sensor 41-3, the points d1 to d2 and d4 to d5 of the bend sensor 41-4, and the points e1 to e2 and e4 to e5 of the bend sensor 41-5 have different resistance values from an original state. Points a3, b3, c3, d3, and e3 are sensed to have a same resistance value as the original state, and are determined to not be bent.

In the bend sensor 41-1, the points a1 to a2 and the points a4 to a5 are continuous, but the points a2 to a4 are not continuous due to point a3. Accordingly, if it is assumed that the distance between the point a2 and the point a4 is more than the predetermined distance, the points a1 to a2 and the points a4 to a5 may be distinguished as different bending areas. In addition, the points of other bend sensors 41-2 to 41-5 may be distinguished in the same manner.

Accordingly, the flexible display apparatus 100 may define an area 44 including the points a1 to a2 of the bend sensor 41-1, the points b1 to b2 of the bend sensor 41-2, the points c1 to c2 of the bend sensor 41-3, the points d1 to d2 of the bend sensor 41-4, and the points e1 to e2 of the bend sensor 41-5, as a single bending area, and also may define another area 45 including the points a4 to a5 of the bend sensor 41-1, the points b4 to b5 of the bend sensor 41-2, the points c4 to c5 of the bend sensor 41-3, the points d4 to d5 of the bend sensor 41-4, and the points e4 to e5 of the bend sensor 41-5, as another single bending area.

A bending area may include a bending line. The bending line may be defined as a line which connects points which sense highest resistance values in a bending area.

For example, in the bending area 42 of FIG. 5B, a line 43 which connects point a3 which outputs the highest resistance value on the bend sensor 41-1, point b3 which outputs the highest resistance value on the bend sensor 41-2, point c3 which outputs the highest resistance value on the bend sensor 41-3, point d3 which outputs the highest resistance value on the bend sensor 41-4, and point e3 which outputs the highest resistance value on the bend sensor 41-5, is a bending line. In FIG. 5B, the bending line is vertically formed on the center area of the display 110.

In addition, in the bending area 44 of FIG. 5C, a line 46 which connects point a1 which outputs the highest resistance value on the bend sensor 41-1, point b1 which outputs the highest resistance value on the bend sensor 41-2, point c1 which outputs the highest resistance value on the bend sensor 41-3, point d1 which outputs the highest resistance value on the bend sensor 41-4, and point e1 which outputs the highest resistance value on the bend sensor 41-5, is a bending line. In addition, in the bending area 45, a line 47 which connects point a5 which outputs the highest resistance value on the bend sensor 41-1, point b5 which outputs the highest resistance value on the bend sensor 41-2, point c5 which outputs the highest resistance value on the bend sensor 41-3, point d5 which outputs the highest resistance value on the bend sensor 41-4, and point e5 which outputs the highest resistance value on the bend sensor 41-5, is another bending line. In FIG. 5C, the two vertical bending lines are formed on the left and right edge areas of the display 110.

FIGS. 6A and 6B show an example of a method for sensing a folded state of the flexible display apparatus 100.

Firstly, FIG. 6A is a cross-sectional view of the folded flexible display apparatus 100.

When the flexible display 110 is folded, bend sensors provided on one side or both sides of the flexible display 110 are also folded and have resistance values corresponding to the intensity of applied tension.

For example, when the right edge area of the flexible display 110 is folded towards the center as shown in FIG. 6A, a bend sensor 51-1 provided on the rear side of the flexible display 110 is also folded and outputs a resistance value corresponding to the intensity of applied tension.

That is, as is the case of bending, the bend sensor 51-1 has the highest resistance value at a point a3 having the highest tension, and has gradually decreasing resistance values in opposite directions. In other words, on the bend sensor 51-1, as it gets closer to points a2 and a1 in sequence, or gets closer to points a4 and a5 in sequence, from the point A3, the resistance value decreases lower than the resistance value of the point a3.

When the flexible display 110 is bent more than a threshold bending angle, that is, is substantially folded, a resistance value of a point corresponding to a bending line is sensed more than a threshold value. Accordingly, the flexible display apparatus 100 may determine whether folding or ordinary bending is occurring, according to the size of the resistance value.

In addition, if the flexible display 110 is bent and thereby surface points of the flexible display 110 can be in contact with each other, the flexible display apparatus 100 may determine folding by considering that the surface of the flexible display 110 is touched to itself. That is, when the right edge of the flexible display 110 is bent in a Z+ direction and thereby is folded towards the front side, two areas of the flexible display 110 which are spaced apart from each other may come in contact with each other. In this case, an area of the front side of the flexible display apparatus 100 senses the touch and has a greater change in the resistance value than in ordinary bending. Accordingly, when the flexible display apparatus 100 calculates the distance between a boundary of the bent edge and a bending line and senses touch at a point which is the calculated distance far from a bending line in an opposite direction, the flexible display apparatus 100 may determine that the flexible display 110 is folded. FIG. 6B shows a method for determining a folding area according to an embodiment of the present disclosure. FIG. 6B is provided to show that the flexible display 110 is horizontally folded on the basis of the front side, and vertically arranged bend sensors are not shown for convenience of description.

The folding area is an area which is formed by folding the flexible display 110. As is the case of bending, the folding area may be defined as one or more areas including all the points of bend sensors which output resistance values different from an original state as the bend sensors are folded. A method for defining and distinguishing a folding area is the same as that of a bending area, and the description is not repeated here.

Referring to FIG. 6B, points which output resistance values different from the original state, that is, an area 52 including points a1 to a5 of bend sensor 51-1, points b1 to b5 of bend sensor 51-2, points c1 to c5 of bend sensor 51-3, points d1 to d5 of bend sensor 51-4, and points e1 to e5 of bend sensor 51-5 may be defined as a single folding area.

The folding area is divided into two portions on the basis of a folding line. The folding line is a line which connects points having the highest resistance value in the folding area. The folding line may be used as the same meaning as the bending line.

In the folding area 52 of FIG. 6B, a vertical line 53 which connects point a3 which outputs the highest resistance value on the bend sensor 51-1, point b3 which outputs the highest resistance value on the bend sensor 51-2, point c3 which outputs the highest resistance value on the bend sensor 51-3, point d3 which outputs the highest resistance value on the bend sensor 51-4, and point e3 which outputs the highest resistance value on the bend sensor 51-5 indicates a folding line.

When folding is sensed, the flexible display apparatus 100 may perform an operation different from an operation of when ordinary bending occurs. For example, a different content screen may be displayed on the folded area.

The flexible display 110 may be rolled like paper as described above. The flexible display apparatus 100 may determine whether rolling occurs based on sensing results of the sensor 120.

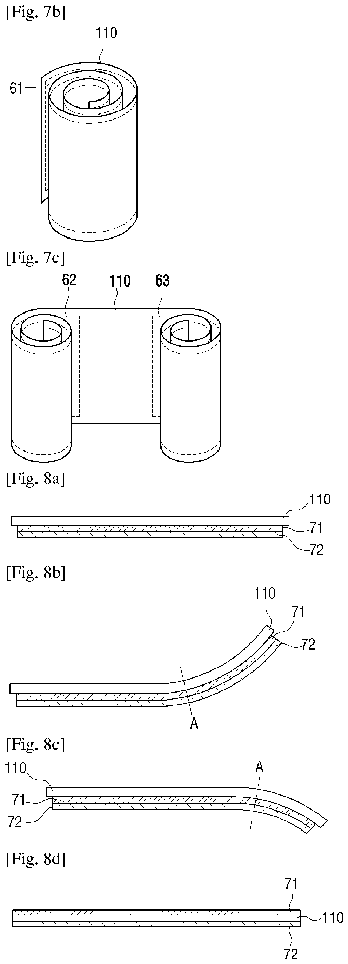

FIGS. 7A, 7B, and 7C show a method for sensing rolling of a flexible display according to an embodiment of the present disclosure.

Firstly, FIG. 7A is a cross-sectional view of the rolled flexible display apparatus 100.

When the flexible display 110 is rolled, tension is applied to bend sensors which are provided on one side or both sides of the flexible display 110.

In this case, the intensity of the tension applied to the bend sensors is similar within a threshold range. Accordingly, resistance values output from the bend sensors also become similar within the threshold range.

For rolling, bending must occur within a threshold curvature. In addition, when the flexible display 110 is rolled, a bending area becomes broader than that in ordinary bending or folding. Accordingly, when the flexible display apparatus 100 senses that bending continuously occurs more than a threshold bending angle on an area which is broader than a threshold area, the flexible display apparatus 100 determines to be in a rolling state. In the rolling state, the front side and the rear side of the flexible display 110 are substantially in contact with each other. For example, when an edge 60-1 of the flexible display 110 is bend in the Z+ direction and thereby is rolled towards the inside of the display 110 as shown in FIG. 7A, the front side of the display 110 is in contact with the rear side on which the bend sensor 60-1 is provided.

Accordingly, in another embodiment, the flexible display apparatus 100 may determine whether the flexible display 110 is rolled according to whether the front side and the rear side of the flexible display 110 are in contact with each other. In this case, the sensor 120 may include a touch sensor. When resistance values output from the bend sensor are similar within a threshold range and when touch sensors provided on the front side and the rear side of the flexible display apparatus 100 sense touch, the flexible display apparatus 100 determines that rolling occurs. In addition, the flexible display apparatus 100 may alternatively determine bending of the flexible display 110 and the contact or approach of portions of the flexible display 110 using a magnetic sensor, a light sensor, or a proximity sensor instead of the touch sensor.

FIGS. 7B and 7C show a method for defining a rolling area according to an embodiment of the present disclosure.

A rolling area is the entire rolled area of the flexible display apparatus 100. The rolling area may be defined as one or more areas including all the points of bend sensors which output resistance values different from an original state as in ordinary bending and folding. A method for defining and distinguishing a rolling area is the same as that of a bending area or a folding area, and description thereof is not repeated here.

When the flexible display 110 is entirely rolled as shown in FIG. 7B, substantially the entire area 61 of the flexible display 110 becomes a rolling area. When the flexible display 110 is partially rolled as shown in FIG. 7C, and when points which output resistance values different from the original state are spaced apart more than a threshold distance, areas 62 and 63 of the flexible display 110 become different rolling areas.

As described above, the flexible display 110 may be bent in diverse forms and may sense a bending form based on the sensing results of the sensor 120. In addition, the flexible display apparatus 100 may sense how much the flexible display 110 is bent, that is, a bending angle.

Although not shown in the drawings, the flexible display apparatus 100 may determine a degree of bending of the flexible display 110 using changes in the sizes of resistance values output from the bend sensor at regular intervals. More specifically, the flexible display apparatus 100 calculates the difference between a resistance value of a point which outputs the highest resistance value on the bend sensor, and a resistance value of a point which is a threshold distance spaced apart from the point having the highest resistance value.

Subsequently, the flexible display apparatus 100 may determine a degree of bending using the calculated difference of the resistance values. More specifically, the flexible display apparatus 100 divides a degree of bending into a plurality of levels, matches each level with a predetermined range of resistance values, and stores the information.

Accordingly, the flexible display apparatus 100 may determine a degree of bending based on a level to which the calculated difference of the resistance values belongs from among the plurality of levels.

The flexible display apparatus 100 may perform an appropriate operation according to the degree of bending. For example, in channel zapping, if the degree of bending is high, the speed of channel zapping may become faster or a range of channel zapping may become broader. On the contrary, if the degree of bending is low, the speed of channel zapping may become slower or channel zapping may be performed in the unit of a smaller number of channels. Also, when controlling volume or changing content, the flexible display apparatus 100 may perform different operations according to the degree of bending.

As described above, the bending direction of the flexible display apparatus 100 may vary, such as in the Z+ direction and the Z- direction.

The bending direction may be sensed in diverse ways. For example, two bend sensors can be stacked and thus may determine the bending direction based on change in the size of resistance values of the bend sensors. For example, when a first bending sensor has a greater change in resistance than a second bending sensor stacked with the first bending sensor, it can be determined that the first bending sensor is on the outside of a bend.

FIGS. 8A, 8B, 8C, and 8D show a method for sensing the bending direction using piled bend sensors according to an embodiment of the present disclosure.

For convenience of description, FIGS. 8A to 8C show ordinary bending as an example. However, it is also possible to apply the following description to folding and rolling.

With reference to FIG. 8A, two bend sensors 71 and 72 are stacked one upon another on one side of the display 110. In this case, when bending occurs in one direction, resistance values of the upper bend sensor 71 and the lower bend sensor 72 at a bent point become different. Accordingly, the bending direction may be determined by comparing the resistance values of the two bend sensors 71 and 72 at the same point.

More specifically, when the flexible display 110 is bent in Z+ direction as shown in FIG. 8B, the lower bend sensor 72 receives greater tension than the upper bend sensor 71 at point A corresponding to a bending line.

On the contrary, when the flexible display 110 is bent in the direction of the rear side as shown in FIG. 8C, the upper bend sensor 71 receives greater tension than the lower bend sensor 72.

Accordingly, the flexible display apparatus 100 may sense the bending direction by comparing the resistance values of the two bend sensors 71 and 72 at point A.

In FIGS. 8A to 8C, the two bend sensors 71 and 72 are stacked one upon another on one side of the display 110. However, the two bend sensors 71 and 72 may alternatively be provided on both sides of the display 110 respectively.

FIG. 8D shows that the two bend sensors 71 and 72 are provided on both sides of the display 110 respectively.

Accordingly, when the flexible display 110 is bent in first direction (referred to herein below as Z+ direction) perpendicular to a screen, a bend sensor which is provided on first side of the display 110 receives compressive force, and a bend sensor which is provided on second side of the display 110 receives tension. On the contrary, when the flexible display 110 is bent in second direction (referred to herein below as Z- direction) opposite to the first direction, the bend sensor which is provided on the second side of the display 110 receives compressive force, and the bend sensor which is provided on the first side of the display 110 receives tension. Since values sensed by the two bend sensors are differently output according to the bending direction as described above, the flexible display apparatus 100 may determine the bending direction based on the features of the sensed values.

In FIGS. 8A to 8D, the bending direction is sensed using the two bend sensors 71 and 72. However, bending direction may be determined using only a strain gauge (not shown) provided on one side of the display 110. In other words, since the strain gauge provided on the one side of the display 110 receives compressive force or tensile force according to the bending direction, the bending direction may be determined by identifying the features of an output value.

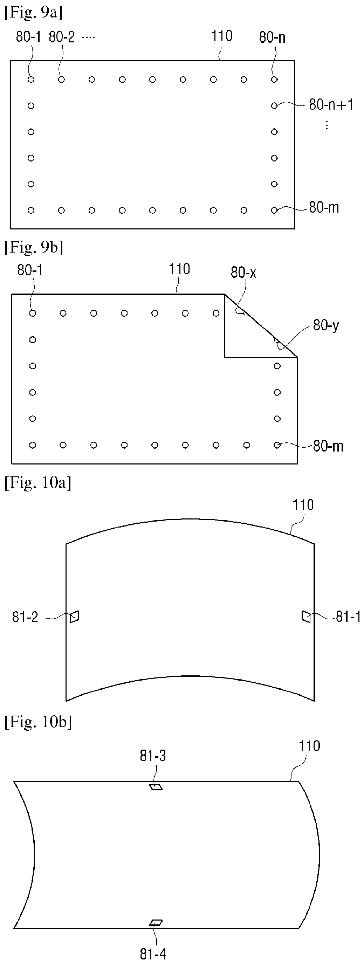

FIGS. 9A and 9B show a method for sensing bending direction according to another embodiment of the present disclosure.

In the above embodiments, bend sensors of line shape are used. However, bending may be sensed using a plurality of fragmentary strain gauges.

FIGS. 9A and 9B show that bending is sensed using a plurality of strain gauges. The strain gauges sense changes on a surface of an object according to changes in the resistance value using a metal or semiconductor of which resistance changes according to the intensity of an applied force. In general, when a material such as a metal is lengthened by external force, the resistance value increases, and when the material is shortened by external force, the resistance value decreases. Accordingly, it may be determined whether bending occurs by sensing a change in the resistance value.

Referring to FIG. 9A, a plurality of strain gauges are arranged on the edge areas of the display 110. The number of the strain gauges may vary according to the size, shape, and predetermined bending sensing resolution of the display 110.

The strain gauges may be provided on one side or both sides of the display 110. If the strain gauges are provided on both sides, the front side and the rear side, of the display 110, strain gauges on the front side may sense bending of the display 110 which is concavely bent in the front side direction, that is, in a Z+ direction, and strain gauges on the rear side may sense bending of the display 110 which is concavely bent in the rear side direction, that is, in a Z- direction.

If the strain gauges are provided on only one side, either the front side or the rear side, of the display 110, the strain gauges may sense bending of the display 110 which is bent in both the front and rear side directions. For example, if the strain gauges are embedded in the front side of the display 110 and the display 110 is bent in a Z+ direction, the sensor 120 may sense that a line which connects strain gauges outputting the lowest resistance value is a bending line. In addition, if the strain gauges are embedded in the front side of the display 110 and the display 110 is bent in a Z-direction (although not shown in the drawings), the sensor 120 may sense that a line which connects strain gauges outputting the highest resistance value is a bending line.

When the strain gauges are arranged as shown in FIG. 9A, the user may bend any portion of the display 110 in any direction. When a corner of the display 110 is bent as shown in FIG. 9B, a force is applied to a strain gauge 80-x which overlaps a bending line from among the horizontally arranged strain gauges 80-1 to 80-n. Accordingly, an output value of the strain gauge 80-X becomes higher than those of other strain gages. In addition, since force is applied to a strain gauge 80-y which overlaps the bending line from among the vertically arranged strain gauges 80-n and 80-n+1 to 80-m, an output value of the strain gauge 80-y changes. The flexible display apparatus 100 may determine that a line which connects the two strain gauges 80-x and 80-y having changed output values is the bending line.

FIGS. 10A and 10B show a method for sensing bending direction according to yet another embodiment of the present disclosure.

FIGS. 10A and 10B show a method for sensing bending direction using acceleration sensors as an example of the sensor. With reference to FIGS. 10A and 10B, the flexible display 110 may include a plurality of acceleration sensors 81-1 and 81-2.

The acceleration sensors 81-1 and 81-2 are sensors which sense acceleration and direction of acceleration when the flexible display 110 moves. More specifically, the acceleration sensors 81-1 and 81-2 output sensing values corresponding to the acceleration of gravity which changes according to a slope of a device to which the acceleration sensors are attached. Accordingly, if the acceleration sensors 81-1 and 81-2 are provided on two opposite edge areas respectively, output values sensed by the acceleration sensors 81-1 and 81-2 change when the flexible display 110 is bent. The flexible display apparatus 100 may calculate a pitch angle and a roll angle using the output values sensed by the acceleration sensors 81-1 and 81-2. Accordingly, the bending direction may be determined based on changes in the pitch angle and the roll angle.

In FIG. 10A, the acceleration sensors 81-1 and 81-2 are horizontally provided on the two opposite edges of the front side of the flexible display 110. However, it is also possible that the acceleration sensors may be vertically provided as in FIG. 10B. In this case, when the flexible display 110 is vertically bent, the bending direction may be sensed based on output values sensed by the acceleration sensors 81-3 and 81-4.

In FIGS. 10A and 10B, the acceleration sensors are provided on the left and right edges or the upper and lower edges of the flexible display 110. However, the acceleration sensors may be provided on the left, right, upper, and lower edges, or alternatively on the corners of the flexible display 110. The acceleration sensors should be provided spaced a threshold distance apart from each other on the flexible display 110.

It is also possible to sense the bending direction using gyro sensors or geomagnetic sensors instead of the acceleration sensors. The gyro sensor is a sensor to sense the angular speed by measuring Coriolis force to act on speed direction when rotary motion occurs. According to a value measured by the gyro sensor, it may be determined in which direction the rotary motion occurs so that the bending direction may be determined. The geomagnetic sensor is a sensor to sense azimuth using a 2-axis or 3-axis flux gate. If geomagnetic sensors are used, the geomagnetic sensors are provided on the edges of the flexible display 110. Accordingly, when an edge area is bent, the geomagnetic sensor outputs an electrical signal corresponding to change in terrestrial magnetism due to movement of location. The flexible display apparatus 100 calculates a yaw angle using the value output from the geomagnetic sensor. Therefore, the flexible display apparatus 100 can determine diverse bending features such as bending area and bending direction according to the calculated change in the yaw angle.

The flexible display apparatus 100 may sense bending using diverse types of sensors. The aforementioned structure of the sensors and the aforementioned sensing method may be applied to the flexible display apparatus 100 individually or in combination.

The sensor 120 may sense the user's touch on the screen of the display 110 as well as bending.

For example, the sensor 120 may include a transparent conductive film, such as Indium-Tin Oxide (ITO), which is coated on the substrate 111 of the display 110, and a film which is provided on the transparent conductive film. Accordingly, when the user touches the screen, the upper film and the lower film are in contact with each other at the touched point so that an electrical signal may be transmitted to the controller 140. The controller 140 recognizes the touched point using coordinates of an electrode which transmits the electrical signal. Since methods for sensing touch are known in diverse related-art documents, a detailed description thereof is not given here.

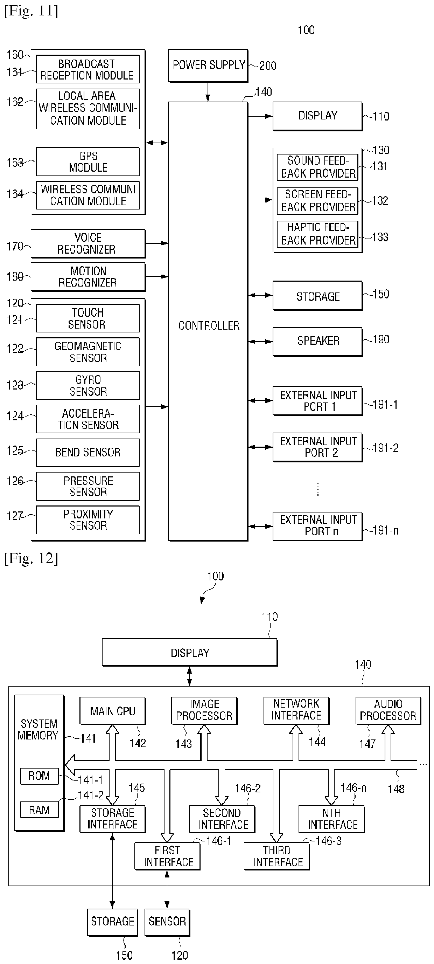

FIG. 11 is a block diagram of a detailed configuration of the flexible display apparatus 100 to describe operations consistent with diverse various embodiments of the present disclosure.

With reference to FIG. 11, the flexible display apparatus 100 may include a display 110, a sensor 120, feedback provider 130, a controller 140, a storage 150, a communicator 160, a voice recognizer 170, a motion recognizer 180, a speaker 190, external input ports 191-1 to 191-N, and a power supply 200.

The display 110 is flexible. Since detailed structure and operation of the display 110 has been described above, a detailed description thereof is not repeated.

The storage 150 may store diverse programs and data related to operation of the flexible display apparatus 100, setting information set by the user, operating software, diverse application programs, and feedback effect corresponding to parameters which constitute bending. The parameters may include location of a bending area (or a bending line) which defines the bending state, a bending direction, a bending angle, a bending radius, and the like.

The sensor 120 senses the user's manipulations, in particular, bending, which occur in the flexible display apparatus 100 as well as in the display 110. With reference to FIG. 11, the sensor 120 may include diverse types of sensors such as a touch sensor 121, a geomagnetic sensor 122, a gyro sensor 123, an acceleration sensor 124, a bend sensor 125, a pressure sensor 126, and a proximity sensor 127.

The touch sensor 121 may be implemented in a capacitive or resistive method. A capacitive touch sensor senses fine electricity from the user's body and calculates touched coordinates using a dielectric substance coated on the surface of the display 110 when a portion of the user's body touches the surface of the display 110. A resistive touch sensor is a touch sensor which includes two electrode plates embedded in a remote control apparatus (not shown) so that when the user touches the display 110, the upper plate and the lower plate at a touched point are in contact, the flow of electricity is sensed, and thereby touched coordinates may be calculated. Other than that, an infrared sensing method, a surface ultrasonic wave conductive method, an integral tension measuring method, a piezo effect method, and the like may be used to sense touch manipulations.

The infrared sensing method is a method for sensing a touched position using the feature that when an object capable of blocking out light such as a finger touches a screen of a monitor in which an Opto-Matrix-frame is provided, light which is emitted from an Infrared Emitting Diode (IRED) is blocked out and thus is not sensed by a phototransistor on the opposite side.

The surface ultrasonic wave conductive method is a method for sensing a time interval of sound which is reflected and received by a transmitter and a reflector, using a simple principle which uses the feature of propagating sound along the surface of an ultrasonic wave. The feature of propagation of sound that a progressing distance within a certain amount of time is regular.

The integral tension measuring method uses the feature that when one corner is pressed by a finger, a tension measuring apparatus on the pressed corner, from among the tension measuring apparatuses at the four corners, receives the highest force. The force is converted into an electrical signal according to a degree of the increased force and is transmitted to the controller 140. In this case, the controller 140 calculates the proportion of the electrical signals of the four corners and thus finds the touched position.

In the piezo effect method, when the user touches the display 110, pressures applied to the four corners are different according to a degree and a position of touch pressure. The controller 140 calculates the ratio according to the pressures and calculates coordinates therefrom.

The touch sensor 121 may be implemented in diverse forms as described above.

The geomagnetic sensor 122 is a sensor to sense rotation state and moving direction of the flexile display apparatus 100.

More specifically, the geomagnetic sensor 122 measures azimuth. That is, the geomagnetic sensor 122 senses the magnetic field formed in north and south direction of the earth and measures azimuth. The geomagnetic sensor 122 may be implemented with a 3-axis geomagnetic sensor which measures the intensity and direction of magnetism with respect to 3 axes which are at right angles to one another. The north direction measured by the geomagnetic sensor 122 may be magnetic north. Although the geomagnetic sensor 122 measures magnetic north, true north may alternatively be output by internal calculation.

The gyro sensor 123 is an inertial sensor to measure a rotational angular velocity of the flexible display apparatus 100. That is, the gyro sensor 123 finds the current direction using an inertial force of a rotating object. The gyro sensor 123 may be implemented with a 3-axis angular velocity sensor which measures amount of fluctuation of a rotation angle with respect to 3 axes which are at right angles to one another.

The acceleration sensor 124 senses a degree of inclination of the flexible display apparatus 100. The acceleration sensor 124 may sense at least one of a change in acceleration and a change in angular acceleration which occur when the user moves the flexible display apparatus 100. The acceleration sensor 124 may be implemented with a 3-axis acceleration sensor which measures an amount of fluctuation of a linear velocity with respect to 3 axes which are at right angles to one another. Accordingly, the acceleration sensor 124 may acquire information regarding an inclination of the flexible display apparatus 100.

The geomagnetic sensor 122, the gyro sensor 123, and the acceleration sensor 124 may not only be used to sense bending properties such as bending direction and bending area of the flexible display apparatus 100, but also may be used to sense a rotation and an inclination of the flexible display apparatus 100.

The bend sensor 125 may be implemented in diverse forms and diverse numbers. Since diverse examples of configuration and operation of the bend sensor 125 have been described above, they are not repeated here.

When the user touches or bends the flexible display apparatus 100, the pressure sensor 126 senses the intensity of pressure applied to the flexible display apparatus 100, and provides the information to the controller 140. The pressure sensor 126 may include a piezo film which is embedded in the display 110 and outputs an electrical signal corresponding to the intensity of pressure. FIG. 17 shows that the pressure sensor 126 is separate from the touch sensor 121 (not shown). However, if the touch sensor 121 is a resistive touch sensor, the resistive touch sensor may also act as the pressure sensor 126.

The proximity sensor 127 is a sensor which senses approaching motion without any physical contact with the surface of the display 110. The proximity sensor 127 may be implemented in diverse forms, such as a high-frequency oscillation type to form a high-frequency magnetic field and to sense induced electric current using features of magnetic field which changes when an object approaches, a magnetic type using magnetism, and a capacitance type to sense a capacitance which changes according to the approach of an object.

Although not shown in the drawing, the sensor 120 may further include a grip sensor. The grip sensor is a sensor which is provided separately from the pressure sensor 126 on an edge or a handle of the flexible display apparatus 100 to sense the user's grip. The grip sensor may be implemented with the touch sensor 121 or the pressure sensor 126.

The feedback provider 130 may include one or more of a sound feedback provider 131, a screen feedback provider 132, and a haptic feedback provider 133.

The sound feedback provider 131 may provide a corresponding sound feedback when a bending degree sensed by the sensor 120 exceeds a threshold value. For example, the sound feedback provider 131 may provide a sound feedback such as a beep sound or a voice message which may be set as default or be set by the user.

The screen feedback provider 132 may provide a corresponding screen feedback when a bending degree sensed by the sensor 120 exceeds a threshold value. For example, the screen feedback provider 132 may provide diverse screen feedback such as changing a brightness of the screen, flickering the screen, or changing a color of the screen.

The haptic feedback provider 133 may provide a corresponding haptic feedback when a bending degree sensed by the sensor 120 exceeds a threshold value. The haptic feedback enables the user to feel a vibration, a force, or an impact generated from the flexible display apparatus 100. Haptic feedback is also called computer tactile sensation technology.

In particular, the haptic feedback provider 133 may provide diverse haptic feedback by applying various vibration conditions (for example, a vibration frequency, a length of vibration, an intensity of vibration, a vibration waveform, and a location of vibration) according to a bending degree sensed by control of the controller 140. Since a method for generating diverse haptic feedback by applying various vibration methods has been already published, a detailed description is not repeated here.

In addition, the haptic feedback provider 133 may provide haptic feedback to the front side of the flexible display apparatus 100 (where the display 110 is placed), and may also separately provide haptic feedback to the rear side. In addition, the haptic feedback provider 133 may provide haptic feedback to the entire flexible display apparatus 100. It is also possible to provide haptic feedback to only a portion (for example, the edges) of the flexible display apparatus 100.

In the above embodiment, the haptic feedback provider 133 provides haptic feedback using a vibration sensor. The haptic feedback provider 133 may alternatively provide haptic feedback using a piezo sensor.

The controller 140 may control the feedback provider 130 to provide a particular type of feedback according to a bending degree sensed by the sensor 120.

In addition, the controller 140 may control the feedback provider 130 to provide corresponding feedback when the bending degree sensed by the sensor 120 exceeds a threshold value. Since other functions of the controller 140 have been described above with reference to FIG. 1, a detailed description is not repeated here.

The communicator 160 communicates with diverse types of external devices in diverse communication methods. The communicator 160 may include diverse communication modules such as a broadcast reception module 161, a local area wireless communication module 162, a Global Positioning System (GPS) module 163, and a wireless communication module 164. The broadcast reception module 161 may include a terrestrial broadcast reception module (not shown) which includes an antenna, a demodulator, and an equalizer to receive a terrestrial broadcast signal, and a Digital Multimedia Broadcasting (DMB) module to receive a DMB signal. The local area wireless communication module 162 is a module which communicates with an external device which is located in a local area according to local area wireless communication standards such as Near Field Communication (NFC), Bluetooth, Zigbee, etc. The GPS module 163 is a module which receives GPS signals from GPS satellites and thereby detects a current location of the flexible display apparatus 100. The wireless communication module 164 is a module which is connected to an external network and performs communication according to wireless communication protocols such as WiFi, Institute of Electrical and Electronics Engineers (IEEE) 802.11, etc. The communicator 160 may further include a mobile communication module which accesses a mobile communication network and performs communication according to diverse mobile communication standards such as 3rd Generation (3G), 3rd Generation Partnership Project (3GPP), Long Tern Evolution (LTE), etc.

The controller 140 may recognize voice input or motion input as well as bending manipulations and touch manipulations, and perform a corresponding operation. In this case, the voice recognizer 170 and the motion recognizer 180 may be activated.

The voice recognizer 170 collects the user's voice or external sound using a voice acquisition means such as a microphone (not shown), and transmits the collected sound to the controller 140. In voice control mode, when the user's voice corresponds to one of the pre-stored voice commands, the controller 140 may perform a task corresponding to the user's voice.

The motion recognizer 180 acquires the user's image using an image photographing means (not shown) such as a camera, and transmits the acquired image to the controller 140. In the motion control mode, the controller 140 analyzes the user's image and performs an operation corresponding to a motion gesture when it is determined that the user makes a motion gesture corresponding to one of the pre-stored motion commands.

For example, diverse tasks such as channel zapping, turning on or off of the flexible display apparatus 100, pausing, playback, stop, rewinding, fast forwarding, and muting may be controlled by voice or by motion, but the present disclosure is not limited thereto.

The external input ports 1 to n (191-1 to 191-n) are connected to diverse types of external devices to receive diverse data, programs, and control commands. More specifically, the external input ports 191-1 to 191-n may include one or more of a Universal Serial Bus (USB) port, a headset port, a mouse port, a Local Area Network (LAN) port, etc. The power supply 200 supplies electrical power to the components of the flexible display apparatus 100. The power supply 200 may include one or more of a positive current collector, a positive electrode, an electrolyte portion, a negative electrode, a cathode current collector, and a sheath which covers the preceding. The power supply 200 may be implemented with a secondary battery. The power supply 200 may also be flexible so as to be bent with the flexible display apparatus 100. In this case, the current collectors, the electrodes, and the sheath may be made of flexible materials. More specific shape and materials of the power supply 200 will be described later.

In FIG. 11, the various components of the flexible display apparatus 100 are shown, but the flexible display apparatus 100 may not necessarily include all of the components, and may also include other components. In other words, the flexible display apparatus 100 may omit some components, add other components, or replace some components with others according to the type.

The controller 140 controls each component to perform an operation according to the user's manipulation which is recognized by the sensor 120, the voice recognizer 170, or the motion recognizer 180.

FIG. 12 shows a detailed configuration of the controller 140 shown in FIG. 11.

With reference to FIG. 12, the controller 140 may include a system memory 141, a main Central Processing Unit (CPU) 142, an image processor 143, a network interface 144, a storage interface 145, first to nth interfaces 146-1 to 146-n, an audio processor 147, and a system bus 148.

The system memory 141, the main CPU 142, the image processor 143, the network interface 144, the storage interface 145, the first to nth interfaces 146-1 to 146-n, and the audio processor 147 may be connected to one another via the system bus 148 in order to transmit and receive diverse data and signals.

The first to nth interfaces 146-1 to 146-n support interfacing among the diverse components including the sensor 120 and the components of the controller 140. In FIG. 12, the sensor 120 is shown connected only to the first interface 146-1. However, if the sensor 120 includes the diverse types of sensors as shown in FIG. 11, the respective sensors may be connected to the respective interfaces. At least one of the first to nth interfaces 146-1 to 146-n may be implemented with an input interface which receives diverse signals from buttons provided on a body of the flexible display apparatus 100, or from external devices connected through the external input ports 1 to n.

The system memory 141 may include a Read-Only Memory (ROM) 141-1 and a Random-Access Memory (RAM) 141-2. The ROM 141-1 stores a set of commands for booting up the system. When a turn-on command is input and the power is supplied, the main CPU 142 copies an Operating System (OS) stored in the storage 150 to the RAM 141-2 and executes the OS according to the commands stored in the ROM 141-1 so that the system can boot up. When the boot-up is complete, the main CPU 142 copies diverse application programs stored in the storage 150 to the RAM 141-2 and executes the copied application programs so that diverse operations can be performed.

As described above, the main CPU 142 may perform diverse operations by executing the application program stored in the storage 150.

The storage interface 145 is connected to the storage 150 to transmit or receive programs, contents, and data.

For example, when the user performs a bending manipulation or a touch manipulation corresponding to a playback command to play back and display content stored in the storage 150, the main CPU 142 accesses the storage 150 through the storage interface 145, generates a list of the stored contents, and displays the list on the display 110. In this state, when the user performs a bending manipulation or a touch manipulation to select content, the main CPU 142 runs a content playback program stored in the storage 150. Subsequently, the main CPU 142 constitutes a content playback screen by controlling the image processor 143 according to the commands included in the content playback program.

The image processor 143 may include (not shown) one or more of a decoder, a renderer, and a scalar. Accordingly, the image processor 143 decodes stored content, constitutes a frame by rendering the decoded content, and scales the size of the frame to fit into the screen of the display 110. The image processor 143 provides the processed frame to the display 110, and thus the display 110 displays the content.

The audio processor 147 processes audio data and transmits the audio data to a sound output means such as the speaker 190. The audio processor 147 processes an audio signal by decoding audio data stored in the storage 150 or audio data received through the communicator 160, performing noise filtering, and amplifying the audio data to an appropriate decibel level. In the above example, when video content is played back, the audio processor 147 processes audio data de-multiplexed from the video content and provides the audio data to the speaker 190 in synchronization with the image processor 143.

The network interface 144 connects the flexible display apparatus 100 to an external device through a network. For example, when a web browser application is run, the main CPU 142 accesses a web server through the network interface 144. When web page data are received from the web server, the main CPU 142 controls the image processor 143 to constitute a web page screen, and displays the web page screen on the display 110.

When bending of the flexible display apparatus 100 is sensed, the controller 140 determines whether the bending exceeds a threshold value as described above. When it is determined that the bending exceeds the threshold value, the controller 140 reads out feedback information corresponding to the bending from the storage 150 and performs an operation corresponding to the feedback information. This operation of the controller 140 may be performed by running diverse programs stored in the storage 150.

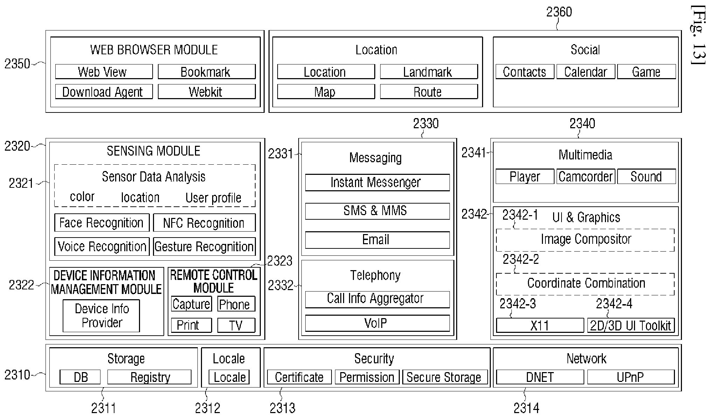

FIG. 13 shows a configuration of software in the storage 150 to support the operations of the controller 140 consistent with the various embodiments of the present disclosure. With reference to FIG. 13, the storage 150 may store one or more of a base module 2310, a device management module 2320, a communication module 2330, a presentation module 2340, a web browser module 2350, and a service module 2360.

The base module 2310 is a basic module which processes a signal transmitted from hardware included in the flexible display apparatus 100 and transmits the signal to an upper layer module.

The base module 2310 may include one or more of a storage module 2311, a locale module 2312, a security module 2313, and a network module 2314.

The storage module 2311 is a program module which manages a Data Base (DB) and a registry. The locale module 2312 is a program module which supports a location-based service consistent with hardware such as a GPS chip. The security module 2313 is a program module which supports one or more of certification, permission, and secure storage of hardware. The network module 2314 is a module which supports a network connection, which includes a DNET module and a Universal Plug and Play (UPnP) module.

The device management module 2320 is a module which manages and uses external input and information regarding an external device. The device management module 2320 may include one or more of a sensing module 2321, a device information management module 2322, and a remote control module 2323.

The sensing module 2321 is a module which analyzes sensor data provided by the sensors in the sensor 120. More specifically, the sensing module 2321 is a program module which senses the location of an object, the location of the user, a color, a shape, a size, and other profiles. The sensing module 2321 may include one or more of a face recognition module, a voice recognition module, a motion recognition module, and a NFC recognition module. The device information management module 2322 is a module which provides information regarding diverse devices. The remote control module 2323 is a program module which remotely controls peripheral devices such as a phone, a TV, a printer, a camera, or an air conditioner.

The communication module 2330 is a module which externally performs communication. The communication module 2330 may include one or more of a messaging module 2331 such as a messenger program, Short Message Service (SMS) and Multimedia Message Service (MMS) programs, and an e-mail program, and a telephony module 2332 including a call information aggregator program module and a Voice over Internet Protocol (VoIP) module.

The presentation module 2340 is a module which constitutes a display screen. The presentation module 2340 may include one or more of a multimedia module 2341 to play back and output multimedia content and a User Interface (UI) & graphics module 2342 to process a UI and graphics. The multimedia module 2341 may include one or more of a player module, a camcorder module, and a sound processing module. Accordingly, the multimedia module 2341 plays back diverse multimedia contents, and generates and plays back the screen and sounds. The UI & graphics module 2342 may include one or more of an image compositor module 2342-1, a coordinate combination module 2342-2 to combine and generate coordinates to display an image on the screen, an X11 module 2342-3 to receive diverse types of events from hardware, and a 2D/3D UI toolkit 2342-4 to provide tools to constitute a 2D or 3D UI.

The web browser module 2350 is a module which accesses a web server by web browsing. The web browser module 2350 may include diverse modules such as one or more of a web view module to constitute a web page, a download agent module to perform downloading, a bookmark module, and a webkit module.

In addition, the service module 2360 is an application module which provides diverse services. For example, the service module 2360 may include diverse modules such as one or more of a navigation service module to provide map, current location, landmark, and route information, a game module, and an advertisement application module.

The main CPU 142 of the controller 140 accesses the storage 150 through the storage interface 145, copies a module stored in the storage to the RAM 141-2, and performs the copied module's operation according to operation of the copied module.

More specifically, the main CPU 142 analyzes output values of diverse sensors in the sensor 120 using the sensing module 2321, identifies bending area, bending line, bending direction, the number of bending manipulations, bending angle, bending speed, touch area, the number of touches, intensity of touch, intensity of pressure, degree of proximity, whether the user grips or not, and determines whether the bending manipulation exceeds a threshold value. When the main CPU 142 determines that the bending manipulation exceeds the threshold value, the main CPU 142 detects feedback information corresponding to the bending from the database of the storage module 2310, drives a module corresponding to the detected feedback information, and performs a corresponding operation.

For example, if the bending manipulation is an operation to display a GUI, the main CPU 142 constitutes a GUI screen using the image compositor module 2342-1 in the presentation module 2340, determines a display position of the GUI screen using the coordinate combination module 2342-2, and controls the display 110 to display the GUI screen.

In addition, when the user's manipulation for one of the diverse operations provided by the flexible display apparatus 100 is performed, the main CPU 142 drives a corresponding module and performs a corresponding operation.

For example, when the user's manipulation occurs for message receiving operation, the main CPU 142 executes the messaging module 2331, accesses a message management server, and receives a message stored in a user account. Subsequently, the main CPU 142 constitutes a screen corresponding to the received message using the presentation module 2340 and displays the screen on the display 110. Furthermore, in order to perform a calling operation, the main CPU 142 drives the telephony module 2332.

In view of the above, the storage 150 may store programs of diverse structures, and the controller 140 may perform operations consistent with the above diverse embodiments using the programs stored in the storage 150.

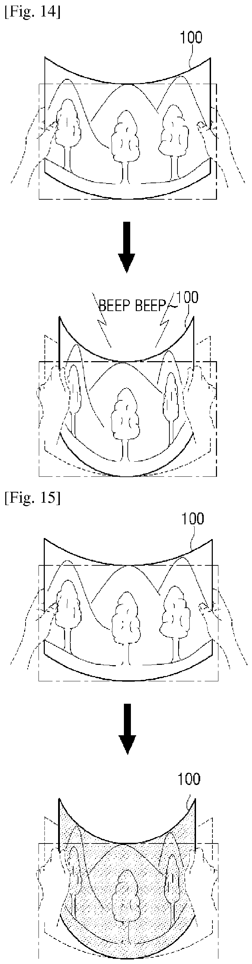

FIG. 14 shows feedback providing method consistent with an embodiment of the present disclosure.

The flexible display apparatus 100 may be bent by the user as shown in FIG. 14. In this case, when a degree of bending exceeds a threshold value, the flexible display apparatus 100 may provide corresponding feedback.

When the degree of bending of the flexible display apparatus 100 exceeds the threshold value as shown in FIG. 14, the flexible display apparatus 100 may provide sound feedback. For example, "beep beep ∼" may be provided as the sound feedback.

In this case, when the degree of bending, that is, a bending radius of curvature at a bending line of a bending area exceeds the threshold value, the flexible display apparatus 100 may provide the corresponding feedback.

FIG. 15 shows feedback providing method consistent with another embodiment of the present disclosure.

When the flexible display apparatus 100 is bent by the user as shown in FIG. 15, the flexible display apparatus 100 may provide corresponding feedback according to a degree of bending.

When a degree of bending of the flexible display apparatus 100 exceeds a threshold value as shown in FIG. 15, the flexible display apparatus 100 may provide corresponding screen feedback. For example, the display screen may become generally darker, but this is merely an example. Diverse types of screen feedback, such as flickering the display screen or changing a portion of the display screen, which the user can recognize may be provided.

FIG. 16 shows feedback providing method consistent with yet another embodiment of the present disclosure.

When a degree of bending of the flexible display apparatus 100 exceeds a threshold value as shown in FIG. 16, the flexible display apparatus 100 may provide corresponding haptic feedback. For example, the haptic feedback may be provided from all or a portion (for example, the edges) of the flexible display apparatus 100. Since a method for providing the haptic feedback has been described above, detailed description is not repeated.

FIG. 17 shows feedback providing method consistent with yet another embodiment of the present disclosure.

As shown in FIG. 17, an element 17 having a stress limit factor may be mounted in an area of the flexible display apparatus 100.

The mounting area may be a flexible area of the flexible display apparatus 100 except for a rigid area.

In this case, when the area in which the element 17 is mounted is bent more than the stress limit factor, the element 17 breaks.

Accordingly, when the flexible display apparatus 100 malfunctions, it may be determined whether or not the malfunction occurs due to excessive bending by checking the state of the element 17.

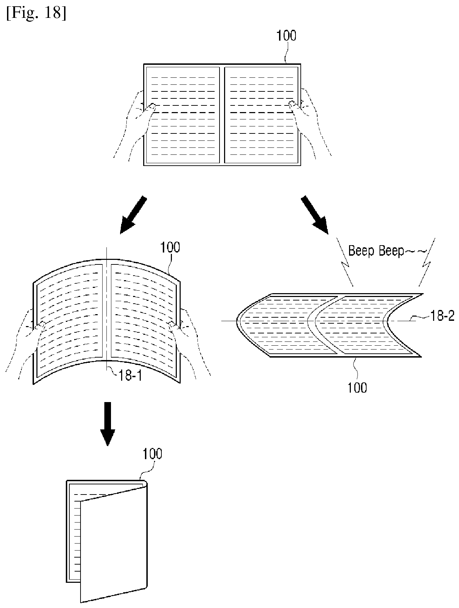

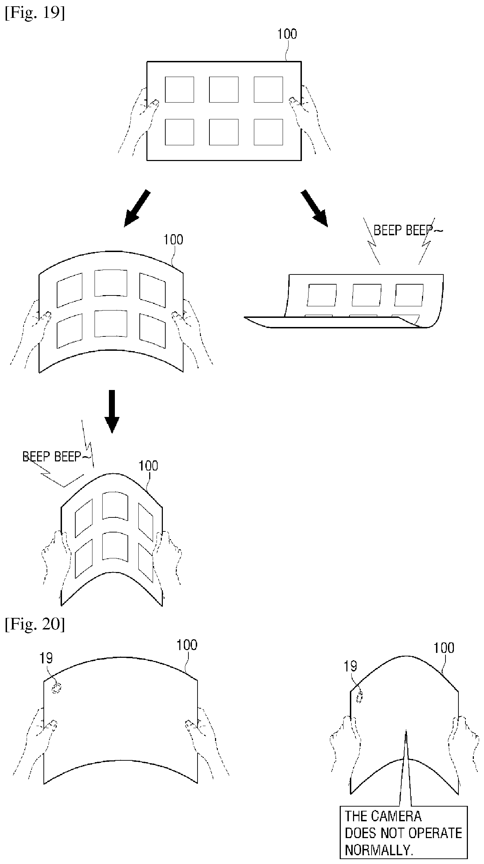

FIGS. 18 and 19 show feedback providing method consistent with yet another embodiments of the present disclosure.

As shown in FIGS. 18 and 19, a threshold value to provide feedback may be set according to an area of the flexible display apparatus 100.

If the flexible display apparatus 100 may be folded in half and kept in the folded state as shown in FIG. 18, a threshold value of an area on which a vertical bending line 18-1 is formed may be set high as shown in the left side of FIG. 18. Accordingly, although significant bending occurs, corresponding feedback may not be provided. However, a threshold value of an area on which a horizontal bending line 18-2 is formed may be set lower as shown in the right side of FIG. 18. Accordingly, when bending of a threshold degree occurs, corresponding feedback may be provided.

As shown in the left side of FIG. 19, bending along a vertical bending line may be set to have a higher threshold value than bending along a horizontal bending line. Accordingly, when bending of the same degree occurs, bending along the vertical bending line may not provide corresponding feedback, and bending along the horizontal bending line may provide corresponding feedback. For example, when bending along the vertical bending line and bending along the horizontal bending line occur at the same degree as shown in the middle of FIG. 19, the bending along the vertical bending line does not provide feedback, and the bending along the horizontal bending line provides feedback. In addition, when bending along the vertical bending line occurs at a higher degree as shown in the third line of FIG. 19, feedback may also be provided.

In the above embodiment, bending along the vertical bending line and bending along the horizontal bending line have been described. In the case of diagonal bending and vertical or horizontal bending, a threshold value may be set differently according to an area.

FIG. 20 shows feedback providing method consistent with yet another embodiment of the present disclosure.

When a particular area is excessively bent as shown in FIG. 20, a function module at an adjacent area may not operate normally. In this case, when the user tries to use the function module, the flexible display apparatus 100 may provide a warning message. For example, when the display apparatus 100 is bent, a camera module 19 may be covered and not operate normally. In this case, when the user tries to use the camera module 19, the flexible display apparatus 100 may provide a corresponding warning message. In this case, the information that when a corresponding area is bent more than a threshold value the camera module 19 cannot operate normally may be pre-stored.

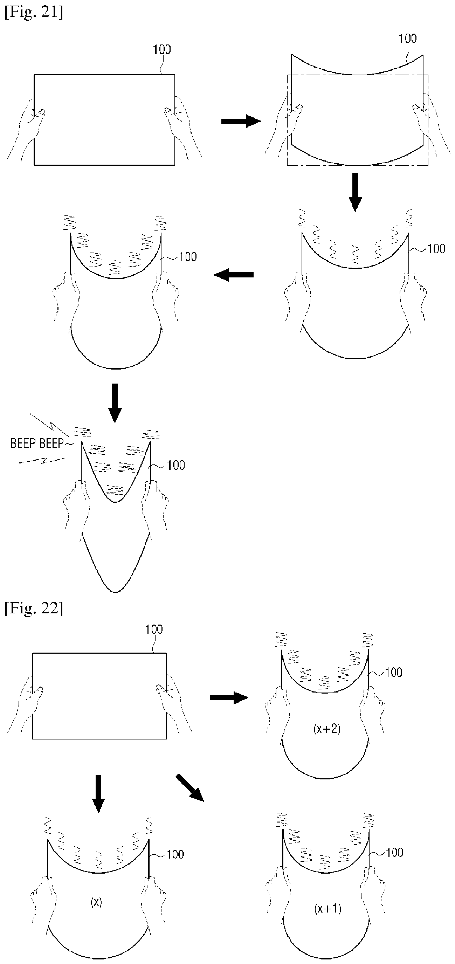

FIG. 21 shows feedback providing method consistent with yet another embodiment of the present disclosure.

As shown in FIG. 21, feedback may be provided according to a degree of bending of the flexible display apparatus 100. More specifically, the same type of feedback (for example, vibration) may be provided with a varied characteristic such as a different intensity, or different types of feedback (for example, vibration and beep sound) may be provided at the same time.

In this case, the degree of bending may be divided into a plurality of levels, and feedback corresponding to each level may be preset. For example, a threshold value which provides feedback may be set low, and when the flexible display apparatus 100 is bent more than the set threshold value, the intensity of feedback may increase according to the bending level.

For example, when the flexible display apparatus 100 is bent at the first level more than the set threshold value as shown in FIG. 21, haptic feedback which generates weak vibration may be provided. When the flexible display apparatus 100 is bent at the second level, haptic feedback which generates intermediate vibration may be provided. When the flexible display apparatus 100 is bent at the third level, the beep sound together with haptic feedback which generates strong vibration may be provided. In the case of bending at the third level, it is also possible to only provide haptic feedback which generates strong vibration.

FIG. 22 shows feedback providing method consistent with yet another embodiment of the present disclosure.

As shown in FIG. 22, when bending more than a threshold value repeatedly occurs at a particular area of the flexible display apparatus 100, different feedback may be provided according to the number of repetitions.

More specifically, as the number of bending manipulations more than the threshold value increases, stronger feedback may be provided. For example, when first bending occurs more than the threshold value as shown in the lower left portion of FIG. 22, weak haptic feedback may be provided. When second bending occurs more than the threshold value as shown in the lower right portion of FIG. 22, intermediate haptic feedback may be provided. When third bending occurs more than the threshold value as shown in the upper right portion of FIG. 22, strong haptic feedback may be provided.

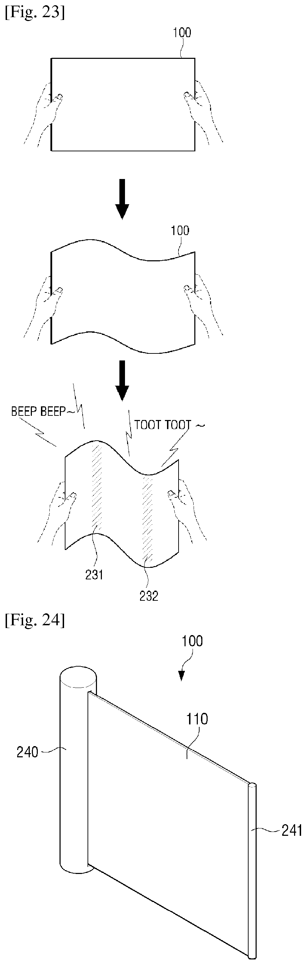

FIG. 23 shows feedback providing method consistent with yet another embodiment of the present disclosure.

When a plurality of areas of the flexible display apparatus 100 are bent more than a threshold value at the same time as shown in FIG. 23, feedback corresponding to the plurality of areas may be provided at the same time.

For example, when the first area 231 and the second area 232 are bent more than the threshold value at the same time as shown in the lower portion of FIG. 23, preset feedback for the first and second areas 231 and 232 may be provided at the same time. That is, "beep beep beep ∼" feedback set for the first area 231 and "toot toot toot ∼" feedback set for the second area 232 are provided at the same time.

In addition, although not shown in FIG. 23, it is also possible to provide local vibration to the first area 231 and the second area 232 as haptic feedback.

FIG. 24 shows an example of a form of the flexible display apparatus 100 which is built in a main body according to an embodiment of the present disclosure.

As shown in FIG. 24, the flexible display apparatus 100 may include a main body 240, a display 110, and a grip 241.

The main body 240 acts as a case to contain the display 110. If the flexible display apparatus 100 includes the components as shown in FIG. 11, the remaining components except for the display 110 and a portion of the sensors may be built in the main body 240. The main body 240 includes a rotation roller to roll the display 110. Accordingly, when the display 110 is not used, the display 110 may be rolled into the main body 240 by the rotation roller for protected storage.

When the user holds and pulls the grip 241, the rotation roller is rotated and released in a direction opposite to the rolling direction so that the display 110 comes out of the main body 240. The rotation roller may include a stopper. When the user pulls the grip 241 more than a predetermined distance, the rotation roller is stopped by the stopper and the display 110 is fixed. Consequently, the user can use diverse functions using the display 110 which is externally exposed. When the user releases the stopper, the stopper is released and the rotation roller is rotated in a reverse direction. As a result, the display 110 is rolled into the main body 240 again. The stopper may be implemented with a switch to stop operation of a gear to rotate the rotation roller. Since the rotation roller and the stopper may use a general rolling structure of the related art, a detailed description and illustration thereof is omitted here.

The main body 240 may include a power supply 200. The power supply 200 may be implemented in diverse forms such as a battery connector in which a disposable battery is mounted, a secondary battery which is rechargeable, or a solar battery which uses solar generated power. If the power supply 200 is a secondary battery, the user may charge the power supply 200 by connecting the main body 240 and an external power source using a cable.

In FIG. 24, the main body 240 is shown in cylindrical shape, but it is also possible to provide the main body 240 in various other shapes, such as a quadrangular or polygonal shape. In addition, in FIG. 24, the display 110 is built in the main body 240 and is externally exposed by pulling the display 110. However, it is also possible to surround the outside of the main body 240 or provide the display 110 in other forms.

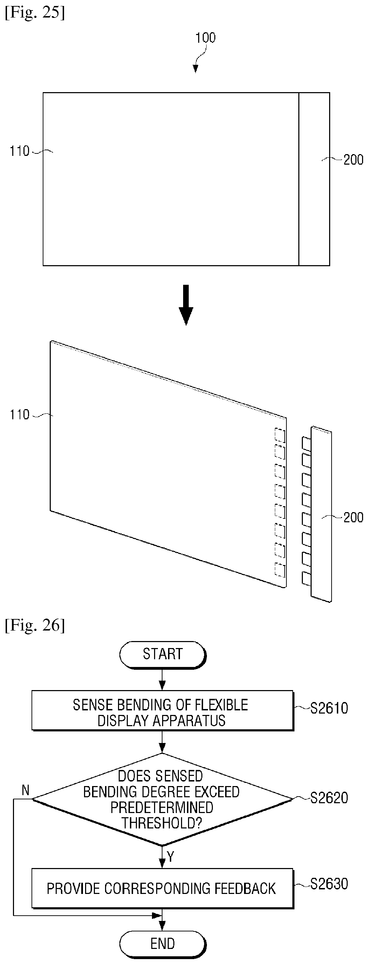

FIG. 25 shows a flexible display apparatus 100 including a detachable power supply 200 according to an embodiment of the present disclosure. With reference to FIG. 25, the power supply 200 is provided to be attached to or detached from an edge of the flexible display apparatus 100.

The power supply 200 may include a flexible material and thus may be bent together with the display 110. More specifically, the power supply 200 may include one or more of a cathode current collector, a negative electrode, an electrolyte portion, a positive current collector, a positive electrode, and a sheath which covers the preceding elements.

For example, the current collector may include one or more of an alloy such as TiNi having high elasticity, a pure metal such as copper or aluminum, a pure metal coated with carbon, a conductive material such as carbon or carbon fiber, a conductive polymer such as polypyrole, and the like.

The cathode current collector may include a negative electrode material which may include one or more of a metal such as lithium, sodium, zinc, magnesium, cadmium, hydrogen storage alloy, or lead, a nonmetal such as carbon, and a polymer electrode material such as organic sulfur.

The positive electrode may include a positive electrode material which may include one or more of sulfur, a metal sulfide, a lithium successive metal oxide such as LiCoO2, SOC12, MnO2, Ag2O, Cl2, NiC12, or NiOOH, and a polymer electrode. The electrolyte portion may be provided in gel type using one or more of PEO, PVdF, PMMA, or PVAC.

The sheath may include one or more of a general polymer resin such as PVC, HDPE, and an epoxy resin. In addition, any material which can be freely bent or is flexible and prevents damage of a battery of thread shape may be used as the sheath.

Each of the positive electrode and the negative electrode in the power supply 200 may include a connector to be electrically connected to the outside.

With reference to FIG. 25, connectors may protrude from the power supply 200, and the display 110 may have grooves which correspond to a location, size, and shape of the connectors. Accordingly, when the connectors are coupled with the grooves, the power supply 200 is coupled with the display 110. The connectors of the power supply 200 are connected to a power connection pad (not shown) in the flexible display apparatus 100 so that power is supplied.

In FIG. 25, the power supply 200 is attached to or detached from an edge of the flexible display apparatus 100, but this is merely an example. The location and shape of the power supply 200 may vary according to the features of the flexible display apparatus 100. For example, if the flexible display apparatus 100 has a particular thickness, the power supplier may be attached to the rear side of the flexible display apparatus 100 accordingly.

FIG. 26 is a flowchart of a feedback providing method consistent with an embodiment of the present disclosure.

With reference to FIG. 26, in operation S2610, when the flexible display apparatus 100 is bent, the bending is sensed.

In operation S2620, it is determined whether a sensed degree of bending exceeds a threshold value. The threshold value may be a radius of curvature.

If the sensed degree of bending exceeds the threshold value in operation S2620, corresponding feedback is provided in operation S2630.

In operation S2630 of providing the feedback, the feedback may be provided according to the sensed degree of bending using pre-stored feedback which is set according to the degree of bending.

In addition, in operation S2630 of providing the feedback, the feedback may be provided to a bending area on which bending occurs more than the threshold value using the pre-stored threshold value which is set according to a bending area.

In addition, in operation S2630 of providing the feedback, the feedback may be provided to a location corresponding to a bending area according to the location of the bending area more than the threshold value.

In addition, in operation S2630 of providing the feedback, when bending exceeding the threshold value repeatedly occurs, various feedback may be provided according to the number of repetitions.

In addition, in operation S2630 of providing the feedback, at least one of screen feedback to change a display state or output a graphical message, sound feedback to output a warning sound or a voice message, and haptic feedback to generate vibration may be provided.

The screen feedback may change the display state by changing at least one of color and brightness of the screen or by flickering the screen.

In addition, when the sensed degree of bending exceeds the threshold value, information regarding the bending may be stored.

In addition, when the information regarding the bending is transmitted to an external server, the external server may provide services or information regarding the bending manipulation.

The information regarding the bending may include at least one of bending location, a bending maintaining time, and a degree of bending.

In the above embodiments, an apparatus including a flexible display is described. However, the feedback providing method according to the diverse embodiments of the present disclosure may be applied to a flexible apparatus which does not include a display. In this case, at least one of the sound feedback and the haptic feedback may be provided. In addition, the feedback providing method according to the embodiments of the present disclosure is not limited to the above mentioned methods. Any method which may be recognized by the user as feedback may be applied.

According to the embodiments of the present disclosure, when the flexible display apparatus is excessively bent, corresponding feedback is provided so that the user may recognize that the bending is excessive. Accordingly, damage or malfunction by excessive bending may be prevented.

The aforementioned diverse methods may be implemented with an application.

More specifically, according to an embodiment of the present disclosure, a non-transitory computer readable storage medium stores a program performing operations of sensing bending of the flexible display apparatus and providing the feedback on the bending when a degree of the sensed bending exceeds a threshold value.

Furthermore, a non-transitory computer readable medium which stores a program to provide feedback effect according to the aforementioned embodiments is provided.

A non-transitory computer readable medium is a medium which does not store data temporarily such as a register or a cache, but instead stores data semi-permanently and is readable by devices. More specifically, the aforementioned applications or programs may be stored and provided in a non-transitory computer readable medium such as a Compact Disk (CD), Digital Versatile Disk (DVD), hard disk, Blu-Ray disk, USB thumb drive, memory card, or ROM.

Accordingly, if a flexible display apparatus has a structure capable of sensing bending, the above program may be installed so that the aforementioned intuitive feedback effects may be provided according to the bending state.

While the present disclosure has been shown and described with reference to various embodiments thereof, it will be understood those skilled in the art that various changes in form and details may be made therein without departing from the scope of the present disclosure as defined by the appended claims and their equivalents.

## Claims

1. A flexible display apparatus (100) comprising:
a sensor (120) configured to sense bending of the flexible display apparatus;
a feedback provider (130) configured to provide feedback according to the sensed bending;
a storage (150) configured to store a threshold value which is set according to a bending area; and
a controller (140) configured to control the feedback provider to provide the feedback when a degree of the sensed bending exceeds a threshold value, and to provide the feedback to a location corresponding to a bending area according to a location of the bending area where bending exceeding the threshold value occurs,
wherein the threshold value is set to vary according to the bending area.

2. The flexible display apparatus of claim 1, further comprising:
a storage configured to store a feedback providing form set according to the degree of bending,
wherein the controller is configured to control the feedback provider to provide varied feedback according to the sensed degree of bending according to the feedback providing form stored in the storage.

3. The flexible display apparatus of claim 1, wherein, when bending exceeding the threshold value occurs repeatedly, the controller is configured to count repetitions of the bending and to control the feedback provider to provide varied feedback according to a number of the repetitions.

4. The flexible display apparatus of 1, further comprising:
a display (110) configured to display a screen,
wherein the controller is configured to control the feedback provider to provide at least one of screen feedback to change a display state of the screen or to output a graphical message, sound feedback to output a warning sound or a voice message, and haptic feedback to generate vibration.

5. The flexible display apparatus of claim 4, wherein the controller is configured to control the feedback provider to provide screen feedback, and the screen feedback changes the display state by changing at least one of a color and a brightness of the screen or by flickering the screen.

6. The flexible display apparatus of claim 1, wherein, when the sensed degree of bending exceeds the threshold value, the controller is configured to store information regarding the bending in the storage (150).

7. The flexible display apparatus of claim 6, further comprising:
a communicator (160) configured to communicate with a server,
wherein the controller is configured to transmit the information regarding the bending to the server, and to receive a service regarding the bending from the server.

8. The flexible display apparatus of claim 6, wherein the information regarding the bending includes information regarding at least one of a bending location, a degree of bending, and a number of bending manipulations.

9. The flexible display apparatus of claim 6, wherein, when the bending exceeding the threshold value is sensed more than a threshold number of times, the controller is configured to change the threshold value.

10. The flexible display apparatus of claim 1, wherein the threshold value comprises a radius of curvature.

11. A method of providing a feedback in a flexible display apparatus (100), the method comprising:
sensing bending of the flexible display apparatus;
storing a threshold value which is set according to a bending area; and
providing the feedback on the bending when a degree of the sensed bending exceeds a threshold value, wherein, in the operation of providing feedback, the feedback is provided on a location of the bending area where bending exceeding the threshold value occurs, and wherein the threshold value is set to vary according to the bending area.

12. The method of claim 11, wherein, in the operation of providing the feedback, varied feedback is provided according to the sensed degree of bending according to a pre-stored feedback providing form, which is set according to the degree of bending.

## Patentansprüche

1. Flexible Anzeigevorrichtung (100), die Folgendes umfasst:
einen Sensor (120), der konfiguriert ist, um eine Biegung der flexiblen Anzeigevorrichtung zu erfassen;
einen Feedbackbereitsteller (130), der konfiguriert ist, um Feedback gemäß der erfassten Biegung bereitzustellen;
einen Speicher (150), der konfiguriert ist, um einen Schwellenwert zu speichern, der gemäß einem Biegebereich festgelegt ist; und
ein Steuergerät (140), das konfiguriert ist, um den Feedbackbereitsteller zu steuern, um das Feedback bereitzustellen, wenn ein Grad der erfassten Biegung einen Schwellenwert überschreitet und um das Feedback an einer Stelle bereitzustellen, die einem Biegebereich gemäß einer Stelle des Biegebereichs entspricht, wo eine den Schwellenwert überschreitende Biegung auftritt, wobei der Schwellenwert festgelegt ist, um gemäß dem Biegebereich zu variieren.

2. Flexible Anzeigevorrichtung nach Anspruch 1, die ferner Folgendes umfasst:
einen Speicher, der konfiguriert ist, um eine feedbackbereitstellende Form zu speichern, die gemäß dem Grad der Biegung festgelegt ist,
wobei das Steuergerät konfiguriert ist, um den Feedbackbereitsteller zu steuern, um variierendes Feedback gemäß dem erfassten Grad der Biegung gemäß der feedbackbereitstellenden Form bereitzustellen, die in dem Speicher gespeichert ist.

3. Flexible Anzeigevorrichtung nach Anspruch 1, wobei, wenn die den Schwellenwert überschreitende Biegung wiederholt auftritt, das Steuergerät konfiguriert ist, um Wiederholungen der Biegung zu zählen und den Feedbackbereitsteller zu steuern, um variierendes Feedback gemäß einer Anzahl der Wiederholungen bereitzustellen.

4. Flexible Anzeigevorrichtung nach Anspruch 1, die ferner Folgendes umfasst:
eine Anzeige (110), die konfiguriert ist, um einen Bildschirm anzuzeigen,
wobei das Steuergerät konfiguriert ist, um den Feedbackbereitsteller zu steuern, um mindestens eines von Bildschirmfeedback, um einen Anzeigezustand des Bildschirms zu ändern oder eine graphische Mitteilung auszugeben, Geräuschfeedback, um ein Warngeräusch oder eine Sprachmitteilung auszugeben, und haptischem Feedback bereitzustellen, um Vibrationen zu erzeugen.

5. Flexible Anzeigevorrichtung nach Anspruch 4, wobei das Steuergerät konfiguriert ist, um den Feedbackbereitsteller zu steuern, um ein Bildschirmfeedback bereitzustellen und das Bildschirmfeedback den Anzeigestatus durch Ändern mindestens eines von einer Farbe und einer Helligkeit des Bildschirms oder durch Flackern des Bildschirms ändert.

6. Flexible Anzeigevorrichtung nach Anspruch 1,
wobei, wenn der erfasste Grad der Biegung den Schwellenwert übersteigt, das Steuergerät konfiguriert ist, um Informationen, die die Biegung betreffen, in dem Speicher (150) zu speichern.

7. Flexible Anzeigevorrichtung nach Anspruch 6, die ferner Folgendes umfasst:
eine Kommunikationseinrichtung (160), die konfiguriert ist, um mit einem Server zu kommunizieren, wobei das Steuergerät konfiguriert ist, um die Informationen, die die Biegung betreffen, an den Server zu übermitteln und um einen Dienst, der die Biegung betrifft, von dem Server zu empfangen.

8. Flexible Anzeigevorrichtung nach Anspruch 6, wobei die Informationen, die die Biegung betreffen, Informationen beinhalten, die mindestens eines von einer Biegestelle, einem Grad der Biegung und einer Anzahl von Biegehandhabungen betreffen.

9. Flexible Anzeigevorrichtung nach Anspruch 6, wobei, wenn die den Schwellenwert überschreitende Biegung öfter als eine Schwellenwertanzahl von Malen erfasst wird, das Steuergerät konfiguriert ist, um den Schwellenwert zu ändern.

10. Flexible Anzeigevorrichtung nach Anspruch 1, wobei der Schwellenwert einen Krümmungsradius umfasst.

11. Verfahren zum Bereitstellen eines Feedbacks in einer flexiblen Anzeigevorrichtung (100), wobei das Verfahren Folgendes umfasst:
Erfassen der Biegung der flexiblen Anzeigevorrichtung;
Speichern eines Schwellenwerts, der gemäß einem Biegebereich festgelegt ist; und
Bereitstellen des Feedbacks auf der Biegung, wenn ein Grad der erfassten Biegung einen Schwellenwert überschreitet, wobei, beim Betrieb des Bereitstellens des Feedbacks, das Feedback auf einer Stelle des Biegebereichs bereitgestellt wird, wo eine den Schwellenwert überschreitende Biegung auftritt, und wobei der Schwellenwert festgelegt ist, um gemäß dem Biegebereich zu variieren.

12. Verfahren nach Anspruch 11, wobei beim Betrieb des Bereitstellens des Feedbacks, variierendes Feedback gemäß dem erfassten Grad der Biegung gemäß einer vorgespeicherten feedbackbereitstellenden Form bereitgestellt wird, die gemäß dem Grad der Biegung festgelegt ist.

## Revendications

1. Appareil d'affichage flexible (100) comprenant :
un capteur (120) configuré pour détecter la courbure de l'appareil d'affichage flexible ;
un fournisseur de retour d'informations (130) configuré pour fournir un retour d'informations selon la courbure détectée ;
un dispositif de stockage (150) configuré pour stocker une valeur seuil qui est définie selon la zone de courbure ; et
un dispositif de commande (140) configuré pour commander le fournisseur de retour d'informations pour fournir le retour d'informations lorsque le degré de courbure détectée est supérieur à une valeur seuil, et pour fournir le retour d'informations à un emplacement correspondant à une zone de courbure selon un emplacement de la zone de courbure où une courbure est supérieure à une valeur seuil, ladite valeur seuil étant définie pour varier selon la zone de courbure.

2. Appareil d'affichage flexible selon la revendication 1 comprenant en outre :
un dispositif de stockage configuré pour stocker une forme de fourniture de retour d'informations définie selon le degré de courbure, ledit dispositif de commande étant configuré pour commander la fourniture de retour d'informations pour fournir un retour d'informations différent selon le degré de courbure détecté selon la forme de fourniture de retour d'informations stockée dans le dispositif de stockage.

3. Appareil d'affichage flexible selon la revendication 1, lorsque la courbure est supérieure à la valeur seuil de façon répétitive, ledit dispositif de commande étant configuré pour compter les répétitions de la courbure et pour commander la fourniture de retour d'informations pour fournir un retour d'informations différent selon le nombre de répétitions.

4. Appareil d'affichage flexible selon la revendication 1, comprenant en outre : un dispositif d'affichage (110) configuré pour afficher un écran, ledit dispositif de commande étant configuré pour commander le fournisseur de retour d'informations pour fournir au moins l'un d'un retour d'informations sur écran pour modifier un état d'affichage de l'écran ou pour délivrer en sortie un message graphique, d'un retour d'informations sonore pour délivrer en sortie un son d'avertissement ou un message vocal et d'un retour d'informations haptique pour générer des vibrations.

5. Appareil d'affichage flexible selon la revendication 4, ledit dispositif de commande est configuré pour commander le fournisseur de retour d'informations pour fournir un retour d'informations sur écran et ledit retour d'information sur écran modifiant l'état d'affichage en modifiant au moins l'un d'une couleur et d'une luminosité de l'écran ou en faisant scintiller l'écran.

6. Appareil d'affichage flexible selon la revendication 1, lorsque le degré de courbure détecté est supérieur à la valeur seuil, ledit dispositif de commande étant configuré pour stocker les informations concernant la courbure dans le dispositif de stockage (150).

7. Appareil d'affichage flexible selon la revendication 6, comprenant en outre :
un communicateur (160) configuré pour communiquer avec un serveur, ledit dispositif de commande étant configuré pour transmettre les informations concernant la courbure au serveur et pour recevoir un service concernant la courbure en provenance du serveur.

8. Appareil d'affichage flexible selon la revendication 6, lesdites informations concernant la courbure comprenant des informations concernant au moins l'un d'un emplacement de courbure, d'un degré de courbure et d'un nombre de flexions.

9. Appareil d'affichage flexible selon la revendication 6, lorsque une courbure supérieure à la valeur seuil est détectée plus qu'un certain nombre seuil de fois, ledit dispositif de commande étant configuré pour modifier la valeur seuil.

10. Appareil d'affichage flexible selon la revendication 1, ladite valeur seuil comprenant un rayon de courbure.

11. Procédé de fourniture de retour d'informations dans un appareil d'affichage flexible (100), ledit procédé comprenant :
la détection de la courbure de l'appareil d'affichage flexible ; le stockage d'une valeur seuil qui est définie selon une zone de courbure ; et la fourniture du retour d'informations sur la courbure lorsque un degré de la courbure détectée est supérieur à une valeur seuil; lors de l'opération de fourniture de retour d'informations, ledit retour d'informations étant fourni sur un emplacement de la zone de courbure où une courbure est supérieure à la valeur seuil et ladite valeur seuil étant définie pour varier selon la zone de courbure.

12. Procédé selon la revendication 11, lors de l'opération de fourniture du retour d'informations, un retour d'informations différent étant fourni selon le degré détecté de courbure selon une forme de fourniture de retour d'informations stockée au préalable, qui est définie selon le degré de courbure.
